(19) Europäisches Patentamt
European Patent Office
Office européen des brevets

(11) **EP 2 846 506 B1**

(12) **FASCICULE DE BREVET EUROPEEN**

(45) Date de publication et mention
de la délivrance du brevet:
**06.04.2016   Bulletin 2016/14**

(51) Int Cl.:
***H04L 27/26*** *(2006.01)*      ***H04L 25/03*** *(2006.01)*

(21) Numéro de dépôt: **14183366.5**

(22) Date de dépôt: **03.09.2014**

(54) **RÉCEPTEUR FBMC À COMPENSATION D'OFFSET DE FRÉQUENCE PORTEUSE**

FBMC-EMPFÄNGER MIT OFFSETKOMPENSATION DER TRÄGERFREQUENZ

FBMC RECEIVER WITH CARRIER FREQUENCY OFFSET COMPENSATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **04.09.2013   FR 1358446**

(43) Date de publication de la demande:
**11.03.2015   Bulletin 2015/11**

(73) Titulaire: **Commissariat à l'Énergie Atomique
et aux Énergies Alternatives
75015 Paris (FR)**

(72) Inventeurs:
 • **Dore, Jean-Baptiste
   38950 Saint Martin le Vinoux (FR)**
 • **Cassiau, Nicolas
   38960 Saint Etienne de Crossey (FR)**

(74) Mandataire: **Brevalex
   56, Boulevard de l'Embouchure
   B.P. 27519
   31075 Toulouse Cedex 2 (FR)**

(56) Documents cités:
 • **STITZ T H ET AL: "CFO estimation and correction
   in a WiMAX-like FBMC system", SIGNAL
   PROCESSING ADVANCES IN WIRELESS
   COMMUNICATIONS, 2009. SPAWC '09. IEEE
   10TH WORKSHOP ON, IEEE, PISCATAWAY, NJ,
   USA, 21 juin 2009 (2009-06-21), pages 633-637,
   XP031487904, ISBN: 978-1-4244-3695-8**
 • **QING BAI ET AL: "On the effects of carrier
   frequency offset on cyclic prefix based OFDM and
   filter bank based multicarrier systems", SIGNAL
   PROCESSING ADVANCES IN WIRELESS
   COMMUNICATIONS (SPAWC), 2010 IEEE
   ELEVENTH INTERNATIONAL WORKSHOP ON,
   IEEE, PISCATAWAY, NJ, USA, 20 juin 2010
   (2010-06-20), pages 1-5, XP031837458, ISBN:
   978-1-4244-6990-1**
 • **FRANK SCHAICH: "Filterbank based multi carrier
   transmission (FBMC) â evolving OFDM: FBMC in
   the context of WiMAX", WIRELESS
   CONFERENCE (EW), 2010 EUROPEAN, IEEE,
   PISCATAWAY, NJ, USA, 12 avril 2010
   (2010-04-12), pages 1051-1058, XP031688571,
   ISBN: 978-1-4244-5999-5**

EP 2 846 506 B1

**Description**

**DOMAINE TECHNIQUE**

La présente invention concerne de manière générale le domaine des systèmes de télécommunication utilisant une modulation multi-porteuse à banc de filtres, encore dénommés systèmes FBMC (*Filter Bank Multi-Carrier*).

**ÉTAT DE LA TECHNIQUE ANTÉRIEURE**

Les systèmes de télécommunication utilisant une modulation multi-porteuse sont bien connus dans l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (Orthogonal Frequency Division Multiplexing). Celle-ci est mise en oeuvre dans les réseaux locaux sans fil WLAN, WiFi, dans l'accès internet sans fil à haut débit (WiMAX), les systèmes de radiodiffusion numérique (DVB-T, ISDB-T, DAB), les liaisons numériques asymétriques (xDSL), la quatrième génération de téléphonie cellulaire (LTE), etc.

Dans un système de transmission OFDM, chaque bloc de symboles OFDM est précédé d'un intervalle de garde ou bien d'un préfixe cyclique, de longueur supérieure à l'étalement temporel de la réponse impulsionnelle du canal, de manière à éliminer l'interférence intersymbole. L'insertion d'un intervalle de garde ou d'un préfixe conduit toutefois à une perte d'efficacité spectrale. Enfin, l'occupation spectrale d'un signal OFDM étant sensiblement plus importante que la bande de sous-porteuses qu'il utilise en raison de l'étalement des lobes secondaires, la modulation OFDM n'est pas une solution optimale pour des applications nécessitant de forts taux de réjection hors bande.

Une modulation par banc de filtres ou FBMC (Filter Bank Multi Carrier) peut être utilisée comme alternative à la modulation OFDM.

Le principe de la modulation FBMC est basé sur une synthèse par banc de filtres à l'émission et une analyse par banc de filtres à la réception.

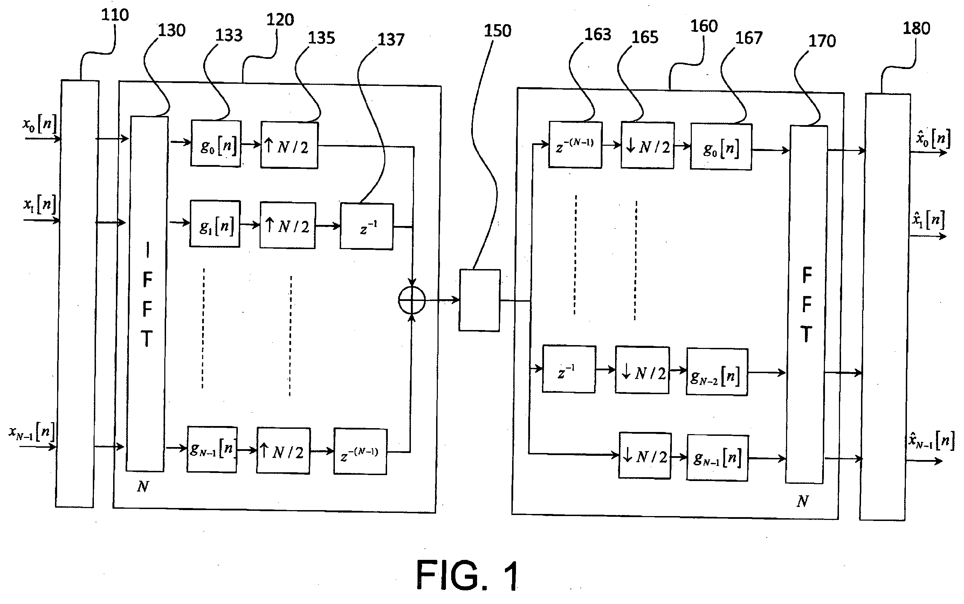

La Fig. 1 représente de manière schématique la structure d'un premier système d'émission / réception FBMC connu de l'état de la technique.

Cette structure a été décrite en détail dans l'article de B. Hirosaki intitulé « An orthogonally multiplexed QAM system using the discrète Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002.

Au niveau de l'émetteur, les symboles de modulation QAM à transmettre avec une cadence $Nf$ où $f = 1/T$ sont groupés par blocs de taille $N$, $x_0[n]$, .... $x_{N-1}[n]$, où $n$ est l'indice temporel du bloc. Chaque bloc de $N$ symboles est fourni en parallèle à N voies d'entrée d'un module de prétraitement 110, dit prétraitement OQAM (Offset QAM). Ce module de prétraitement effectue une modulation des données de type OQAM, c'est-à-dire démultiplexe temporellement la partie réelle et la partie imaginaire de $x_k[n]$ avec une cadence de $2f$.

Les échantillons ainsi obtenus sont fournis sous la forme de blocs de taille $N$ à un banc de filtres de synthèse 120, constitué d'un module IFFT (transformée de Fourier rapide inverse) de taille $N$, 130, d'une pluralité $N$ de filtres polyphasés 133, d'une pluralité de sur-échantillonneurs 135, de facteur $M = N/2$, en sortie des différents filtres polyphasés, et enfin d'une pluralité de retards, 137, arrangés en parallèle et variant de 0 à $N-1$ périodes d'échantillonnage. Chacune des $N$ voies de traitement correspond à un sous-canal.

Les sorties des filtres polyphasés, sur-échantillonnées et retardées sont sommées par l'additionneur 139 avant transmission sur le canal 150.

Les filtres polyphasés sont des versions translatées en fréquence de $k/MT$ d'un filtre prototype dont la réponse impulsionnelle est de durée $KT$, autrement dit la sortie d'un filtre polyphasé recouvre temporellement la sortie du filtre polyphasé adjacent de $M$ échantillons. Il en résulte qu'une sortie de filtre polyphasé recouvre temporellement $K$ autres sorties de filtres polyphasés. Le coefficient $K$ est dénommé pour cette raison coefficient de recouvrement (*overlapping factor*).

Du côté du récepteur, le signal reçu est échantillonné avec une cadence $Nf$. Les échantillons sont fournis sous forme de blocs de taille $N$ à un banc de filtres d'analyse, 160, comprenant une pluralité de retards, 163, arrangés en parallèle et variant de 0 à $N-1$ périodes d'échantillonnage, dans l'ordre inverse des retards 137. Les flux d'échantillons issus des différents retards sont ensuite décimés d'un facteur $M=N/2$ par les décimateurs 165 puis filtrés par les filtres d'analyse 167. Les filtres d'analyse ont une réponse impulsionnelle conjuguée et inversée temporellement par rapport au filtre de synthèse correspondant. Etant donné que le filtre prototype est à valeurs réelles et symétrique par inversion temporelle, on peut montrer qu'un filtre d'analyse a la même réponse impulsionnelle que le filtre de synthèse correspondant. La combinaison d'un filtre de synthèse avec le filtre d'analyse correspondant (produit des fonctions de transfert) donne un filtre de Nyquist.

Les symboles en sortie des filtres de synthèse font ensuite l'objet d'une FFT (transformée de Fourier rapide) de taille *N* en 170, les différentes composantes fréquentielles de la FFT étant ensuite fournies au module de post-traitement 180 effectuant un traitement inverse de celui du prétraitement 110.

Le filtrage de synthèse/analyse étant réalisé dans le domaine temporel, respectivement en sortie du module IFFT et en entrée du module FFT, le système FBMC illustré en Fig. 1 sera dit implémenté dans le domaine temporel.

Le système FBMC est susceptible de représentation dans le domaine fréquentiel comme décrit dans le document de M. Bellanger et al. intitulé « FBMC physical layer : a primer » disponible sur le site www.ict-phydyas.org.

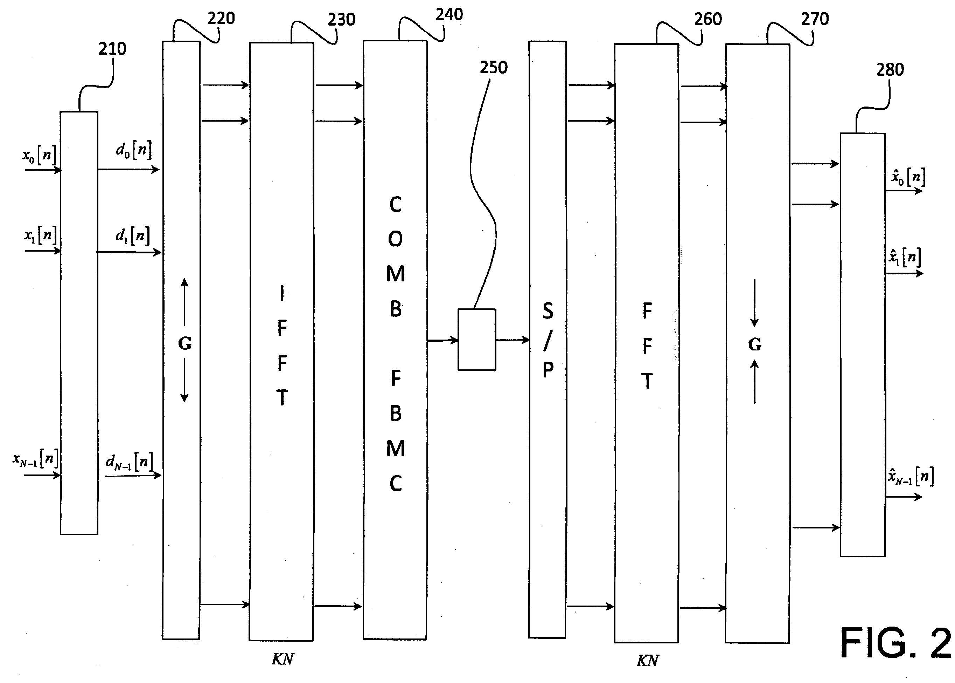

Une implémentation du système FBMC dans le domaine fréquentiel est représentée en Fig. 2.

On retrouve en Fig. 2 le module de prétraitement 210 effectuant une modulation OQAM des données à transmettre.

Chacune des données est ensuite étalée en fréquence sur un intervalle de 2*K*-1 sous-porteuses adjacentes centré sur une sous-porteuse de sous-canal, chaque donnée étant pondérée par la valeur (réelle) prise par la fonction de transfert du filtre de synthèse à la fréquence correspondante. Autrement dit chaque symbole OQAM $d_i[n]$ est étalée sur 2*K*-1 sous-porteuses adjacentes pour donner :

$$\breve{d}_{i,k}[n] = d_i[n]G_k , \ k = -K+1,...,0,..K-1 \tag{1}$$

Le module d'étalement en fréquence et de filtrage par le filtre prototype est désigné par 220. On comprendra que cette opération est équivalente à celle du filtrage par les filtres de synthèse 133 dans l'implémentation temporelle.

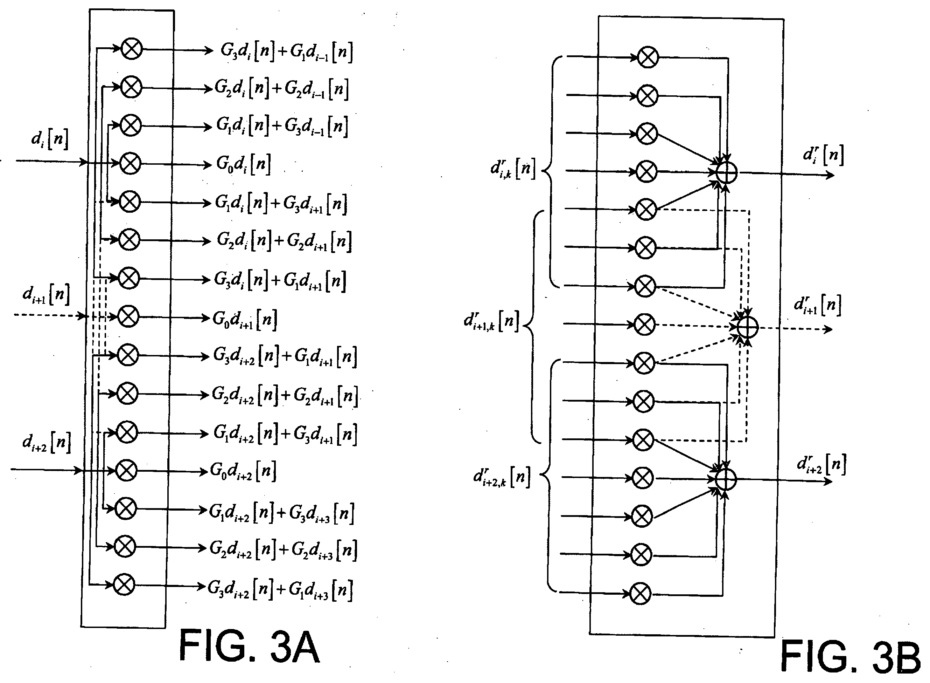

Les données de même parité *i* et *i*+2 sont séparées spectralement et celles de parités contraires *i* et *i*+1 se chevauchent comme représenté en Fig. 3A. Ce chevauchement n'engendre toutefois pas d'interférence puisque deux données de parités contraires sont nécessairement respectivement situées sur l'axe réel et l'axe imaginaire. Par exemple, en Fig. 3A, les données $d_i[n]$ et $d_{i+2}[n]$ sont des valeurs réelles (représentées en traits continus) alors que la donnée $d_{i+1}[n]$ est une valeur imaginaire (représentée par des traits en pointillés).

Les données étalées en fréquence et filtrées font ensuite l'objet d'une IFFT de taille *KN* en 230. On notera que la taille de l'IFFT est étendue d'un facteur *K* par rapport à celle de la Fig. 1, le filtrage par les filtres de synthèse se retrouvant ici réalisé en amont de l'IFFT, dans le domaine fréquentiel.

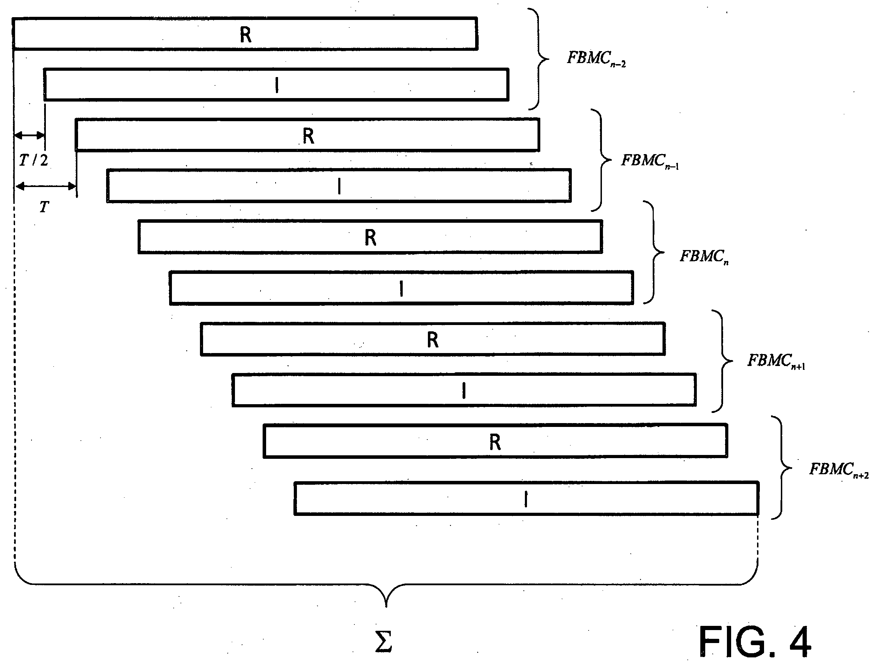

Les sorties de la IFFT sont ensuite combinées dans le module de combinaison 240 comme indiqué en Fig. 4. L'ensemble des échantillons en sortie de l'IFFT représente un symbole FBMC dans le domaine temporel, étant entendu que la partie réelle et la partie imaginaire de ce symbole sont décalées de *T*/2. Les symboles FBMC ayant chacun une durée *KT* et se succédant à la cadence *f* =1/*T,* un symbole FBMC est combiné dans le module 240 avec les *K* / 2 symboles FBMC précédents et *K* / 2 symboles FBMC suivants.

Il est à noter que l'opération de combinaison en 240 est équivalente à celle intervenant au sein des filtres de synthèse de la Fig. 1.

Le signal ainsi obtenu est ensuite translaté à la fréquence porteuse.

Après transmission sur le canal 250, le signal reçu, démodulé en bande de base, est échantillonné par le récepteur à la cadence *Nf*.

Une FFT glissante (la fenêtre de la FFT glissant de *KT* entre deux calculs de FFT) de taille *KN* est effectuée dans le module FFT, 260, sur des blocs de *KN* échantillons consécutifs.

Les sorties de la FFT sont ensuite soumises à un filtrage et un désétalement spectral dans le module 270. L'opération de désétalement a lieu dans le domaine fréquentiel comme représenté en Fig. 3B. Plus précisément les échantillons $\breve{d}_{i,k}^{r}[n]$, *k* =-*K*+1,...,0,..*K*-1 correspondant aux 2*K*-1 fréquences (*i*-1)*K*+1,... *iK* ,... (*i*+1)*K*-1 de la FFT sont multipliés par les valeurs de la fonction de transfert du filtre d'analyse (translatée en fréquence de celle du filtre prototype) aux fréquences en question et les résultats obtenus sont sommés, soit :

$$d_i^r[n] = \sum_{k=-K+1}^{K-1} G_k \breve{d}_{i,k}^r[n] \tag{2}$$

On notera que, comme en Fig. 3A, l'obtention de données ayant des rangs de même parité, par exemple $d_i^r[n]$ et $d_{i+2}^r[n]$ font appel à des blocs d'échantillons disjoints alors que ceux de deux rangs consécutifs, de parités inverses, se chevauchent. Ainsi, l'obtention de la donnée $d_{i+1}^r[n]$ fait appel aux échantillons $\breve{d}_{i,k}^r[n]$, *k*=1,..,*K*-1 ainsi

qu'aux échantillons $\breve{d}_{i+2,k}^{r}[n]$, $k=-K+1,...,1$.

Le désétalement de données réelles est représenté par des traits continus alors que celui des données imaginaires est représenté par des traits en pointillés.

Il est également important de noter que le filtrage par les filtres d'analyse est ici réalisé dans le domaine fréquentiel, en aval de la FFT, contrairement au mode de réalisation de la Fig. 1.

Les données $d_i^r[n]$ ainsi obtenues sont ensuite fournies à un module de post-traitement 280, effectuant le traitement inverse de celui du module 210, autrement dit une démodulation OQAM.

Un des problèmes rencontrés dans les systèmes FBMC est de compenser l'offset de fréquence porteuse au niveau du récepteur. En effet, en présence d'un décalage de fréquence entre la fréquence porteuse de l'émetteur et la fréquence de démodulation du récepteur, les échantillons en entrée du module FFT sont affectés par une rotation de phase qui doit être compensée.

Un récepteur FBMC à compensation d'offset de fréquence porteuse a été proposé dans l'article de T.H. Stitz et al. intitulé « CFO estimation and correction in a Wi-MAX-like FBMC system » publié dans Signal Processing Advances in Wireless Communications, 2009, SPAWC '09, pp. 633-637. Toutefois, ce récepteur FBMC ne permet d'effectuer une compensation d'offset sur la voie montante que dans un contexte mono-utilisateur. En effet, lorsque plusieurs terminaux se partagent le multiplex de sous-porteuses pour transmettre à une station de base et il n'est pas possible de compenser individuellement et indépendamment les offsets entre la fréquence de démodulation du récepteur (de la station de base), d'une part, et les fréquences porteuses des différents émetteurs (des terminaux), d'autre part. En outre, la compensation d'offset qui est proposée est une simple multiplication par un facteur de phase. Elle ne permet pas de compenser l'interférence entre sous-canaux lorsque l'offset de fréquence ne peut plus être négligé au regard de l'écart de fréquence, $\Delta F_c = 1/T$, entre ces sous-canaux.

Un premier objectif de la présente invention est par conséquent de proposer un récepteur FBMC permettant d'effectuer une compensation d'offset y compris lorsque celui-ci est suffisamment important pour engendrer une interférence entre sous-canaux. Un second objectif de la présente invention est de permettre une compensation d'offset sur la voie montante lorsque plusieurs terminaux se partagent l'accès par division du multiplex de sous-porteuses.

## EXPOSÉ DE L'INVENTION

La présente invention est définie par un récepteur de signal FBMC synthétisé au moyen d'un banc de N filtres de synthèse présentant un facteur de chevauchement $K$, ledit récepteur comprenant :

- un module de FFT de taille $KN$ pour effectuer une FFT sur un bloc de $KN$ échantillons dudit signal, après démodulation en bande de base, et fournir un bloc de $KN$ échantillons dans le domaine fréquentiel, correspondant à $KN$ sous-porteuses :
- un module de filtrage par banc de N filtres d'analyse et de désétalement spectral dans le domaine fréquentiel, ledit récepteur comprenant en outre :
- un estimateur d'offset de fréquence porteuse entre la fréquence porteuse du signal et la fréquence de démodulation en bande de base du récepteur;
- un module de décalage en aval du module de FFT décalant les échantillons en sortie de la FFT d'un nombre prédéterminé d'échantillons en fonction de l'offset de fréquence porteuse estimé par ledit estimateur ;
- un filtre de réduction d'interférence pour réduire l'interférence entre sous-porteuses au moyen d'une multiplication par une matrice (**W**) présentant une bande de coefficients non nuls, de largeur $2Q+1$, autour de la diagonale principale, avec $Q < K$, et des zéros partout ailleurs, ledit filtre de réduction d'interférence opérant sur des blocs d'échantillons en sortie du module de décalage et les fournissant au module de filtrage et désétalement spectral.

Ledit nombre prédéterminé d'échantillons est avantageusement obtenu comme la partie entière d'un offset normalisé défini comme le rapport de $\widehat{\delta F}$ par $\Delta F_c / K$ où $\widehat{\delta F}$ est l'offset de fréquence porteuse estimé par l'estimateur d'offset de fréquence porteuse et $\Delta F_c / K$ est l'espacement de fréquence entre sous-porteuses.

Selon une première variante, la matrice du filtre d'interférence est définie par :

$$\mathbf{W} = \mathbf{F}^H \overline{\mathbf{C}}^H \mathbf{F}$$

où **F** est la matrice de Fourier de taille $KN \times KN$, $\overline{C} = \textbf{Diag}(\overline{c}_0,...,\overline{c}_{KN-1})$ avec $\overline{c}_p = \exp\left(2\pi j \dfrac{p\hat{r}}{N}\right)$, $p=0,...,NK$-1 où

$\hat{r}$ est la partie fractionnelle de l'offset normalisé divisé par $K$.

Selon une seconde variante, la matrice du filtre d'interférence est définie par :

$$\mathbf{W} = \frac{S/N}{S/N+1}\left(\mathbf{F}^H.\overline{\mathbf{C}}^H.\mathbf{F}\right)$$

où S/N est le rapport signal sur bruit au niveau de récepteur, F est la matrice de Fourier de taille $KN \times KN$, $\overline{\mathbf{C}} = \textbf{Diag}(\overline{c}_0,...,\overline{c}_{KN-1})$ avec $\overline{c}_p = \exp\left(2\pi j \dfrac{p\hat{r}}{N}\right)$, $p=0,...,NK$-1 où $\hat{r}$ est la partie fractionnelle de l'offset normalisé divisé par $K$.

De préférence, le filtre d'interférence est constitué d'une pluralité (E) de filtres élémentaires en cascade, séparés par des multiplexeurs, chaque multiplexeur étant adapté à sélectionner l'entrée ou la sortie d'un filtre élémentaire, chaque filtre élémentaire effectuant une multiplication matricielle avec une matrice $\overline{\mathbf{W}}^i$ définie par

$$\overline{\mathbf{W}}^i = \mathbf{F}^H.\textbf{Diag}(\overline{w}_0^i,...,\overline{w}_{KN-1}^i)^H.\mathbf{F} \ \ \text{où} \ \ \overline{w}_p^i = \exp\left(\pi j \frac{p}{2^{i-1}N}\right), \ p=0,...,NK-1.$$

Chaque filtre élémentaire peut être pourvu d'un contrôle d'inversion, ledit contrôle d'inversion effectuant une conjugaison des coefficients de la matrice $\overline{\mathbf{W}}^i$ ainsi qu'une symétrie par rapport à la diagonale principale.

De préférence, l'estimateur d'offset détermine la partie fractionnelle $\hat{r}$ de la division de l'offset de fréquence porteuse, $\widehat{\delta F}$ par l'espacement de fréquence entre sous-porteuses, $\Delta F_c / K$, divisée par $K$, et en réalise une approximation à l'aide d'une décomposition dyadique $\hat{r} = \sum_{i=1}^{E} \dfrac{r_i}{2^i}$, $r_i \in \{-1,0,+1\}$, le multiplexeur de rang $i$ court-circuitant le filtre élémentaire de rang $i$ si $r_i = 0$ et activant son contrôle d'inversion si $r_i = -1$.

Le récepteur de signal FBMC peut comporter en outre un égaliseur de canal dans le domaine fréquentiel opérant sur les blocs d'échantillons en sortie du filtre de réduction d'interférence, l'égaliseur de canal étant situé en aval du filtre d'interférence et en amont du module de filtrage et de désétalement spectral.

Chaque bloc d'échantillons en sortie de la FFT ou bien du module de décalage ou bien encore du filtre de réduction d'interférence est avantageusement multiplié à l'aide d'un multiplicateur par un facteur de phase $e^{-j\hat{\varphi}n}$ où $n$ est l'indice du bloc, $\hat{\varphi}_n = 2\pi n \widehat{\delta F}.T$, où $\widehat{\delta F}$ est l'offset de fréquence porteuse estimé par l'estimateur d'offset de fréquence porteuse et T est l'intervalle entre symboles FBMC.

Il peut aussi comprendre un module de post-traitement effectuant une démodulation OQAM sur les blocs d'échantillons en sortie du module de filtrage et de désétalement spectral.

La présente invention concerne en outre une méthode de compensation d'offset de fréquence porteuse dans un récepteur de signal FBMC, ledit signal FBMC étant synthétisé au moyen d'un banc de $N$ filtres de synthèse présentant un facteur de chevauchement $K$, ledit récepteur effectuant :

- une FFT de taille $KN$ sur un bloc de $KN$ échantillons dudit signal, après démodulation en bande de base, pour fournir un bloc de $KN$ échantillons dans le domaine fréquentiel, correspondant à $KN$ sous-porteuses,
- un filtrage par un banc de N filtres d'analyse suivi d'un désétalement spectral dans le domaine fréquentiel, ladite méthode de compensation d'offset comprenant en outre :
- une estimation de l'offset de fréquence porteuse entre la fréquence porteuse du signal et la fréquence de démodulation en bande de base du récepteur;
- un décalage des échantillons en sortie de la FFT pour récupérer un bloc d'échantillons décalé d'un nombre prédéterminé d'échantillons, ledit nombre étant obtenu à partir de l'offset de fréquence porteuse précédemment estimée ;
- un filtrage d'interférence entre sous-porteuses réalisé par multiplication du bloc ainsi décalé avec une matrice présentant une bande de coefficients non nuls, de largeur $2Q+1$, autour de la diagonale principale, avec $Q < K$, et des zéros partout ailleurs.

Ledit nombre prédéterminé d'échantillons est avantageusement obtenu comme la partie entière d'un offset normalisé, défini comme le rapport de $\widehat{\delta F}$ par $\Delta F_c / K$ où $\widehat{\delta F}$ est l'offset de fréquence porteuse estimé par l'estimateur d'offset de fréquence porteuse et $\Delta F_c / K$ est l'espacement de fréquence entre sous-porteuses.

Selon une première variante, la matrice du filtre d'interférence est définie par :

$$\mathbf{W} = \mathbf{F}^H \overline{\mathbf{C}}^H \mathbf{F}$$

où F est la matrice de Fourier de taille $KN \times KN$, $\overline{\mathbf{C}} = \mathbf{Diag}(\overline{c}_0,...,\overline{c}_{KN-1})$ avec $\overline{c}_p = \exp\left(2\pi j \frac{p\hat{r}}{N}\right)$, $p=0,...,NK$-1 où $\hat{r}$

est la partie fractionnelle de la division de l'offset normalisé divisé par $K$.

Selon une seconde variante, la matrice du filtre d'interférence est définie par :

$$\mathbf{W} = \frac{S/N}{S/N+1}\left(\mathbf{F}^H \overline{\mathbf{C}}^H \mathbf{F}\right)$$

où S/N est le rapport signal sur bruit au niveau de récepteur, F est la matrice de Fourier de taille $KN \times KN$,

$\overline{\mathbf{C}} = \mathbf{Diag}(\overline{c}_0,...,\overline{c}_{KN-1})$ avec $\overline{c}_p = \exp\left(2\pi j \frac{p\hat{r}}{N}\right)$, $p=0,...,NK$-1 où $\hat{r}$ est la partie fractionnelle de l'offset normalisé divisé par $K$.

L'opération de filtrage comprend avantageusement une pluralité (E) d'opérations élémentaires de filtrage en cascade, chaque opération de filtrage pouvant être court-circuitée et comprenant une multiplication matricielle avec une

matrice $\overline{\mathbf{W}}^i$ définie par $\overline{\mathbf{W}}^i = \mathbf{F}^H.\mathbf{Diag}(\overline{w}_0^i,...,\overline{w}_{KN-1}^i)^H.\mathbf{F}$ où $\overline{w}_p^i = \exp\left(\pi j \frac{p}{2^{i-1}N}\right)$, $p=0,...,NK$-1.

## BRÈVE DESCRIPTION DES DESSINS

D'autres caractéristiques et avantages de l'invention apparaîtront à la lecture de modes de réalisation préférentiels de l'invention, en référence aux figures jointes parmi lesquelles :

La Fig. 1 représente une première implémentation d'un système d'émission/ réception FBMC connu de l'état de la technique ;
La Fig. 2 représente une seconde implémentation d'un système d'émission/ réception FBMC connu de l'état de la technique ;
La Fig. 3A illustre l'étalement spectral réalisé en amont de l'IFFT dans la Fig. 2 ;
La Fig. 3B illustre le désétalement spectral réalisé en aval de la FFT dans la Fig. 2 ;
La Fig. 4 illustre la combinaison des symboles FBMC dans la Fig. 2 ;
La Fig. 5 représente schématiquement un procédé de compensation d'offset de fréquence porteuse dans un récepteur FBMC, selon un mode de réalisation de l'invention ;
La Fig. 6 représente schématiquement un récepteur FBMC à compensation d'offset de fréquence porteuse selon un premier mode de réalisation de l'invention ;
La Fig. 7 représente schématiquement un mode avantageux de réalisation du filtre de réduction d'interférence du récepteur FBMC de la Fig. 6 ;
La Fig. 8 illustre la performance de la compensation d'offset dans le récepteur FBMC de la Fig. 6 utilisant le filtre de réduction d'interférence de la Fig. 7 ;
La Fig. 9 illustre une compensation d'offset sur la voie montante par le récepteur FBMC de la Fig. 6.

## EXPOSÉ DÉTAILLÉ DE MODES DE RÉALISATION PARTICULIERS

Nous considérerons dans la suite un récepteur FBMC implémenté dans le domaine fréquentiel, tel que décrit en relation avec la Fig. 2. L'idée à la base de l'invention est d'effectuer de manière originale la correction d'offset dans le domaine fréquentiel, en sortie de la FFT.

On supposera tout d'abord que le récepteur ne reçoit des symboles FBMC que d'un seul utilisateur (cas de la voie descendante par exemple ou d'un utilisateur unique sur la voie montante).

Le signal reçu par le récepteur, après démodulation en bande de base, est échantillonné à la fréquence $Nf$ et les échantillons obtenus sont soumis à une FFT glissante, de taille $KN$, où $N$ est le nombre de sous-canaux (ou de manière équivalente le nombre de filtres de synthèse/ d'analyse) et $K$ est le facteur de chevauchement de l'émetteur FBMC.

On désignera par $\mathbf{d}_n$ le vecteur des données, ou plus précisément le vecteur des symboles OQAM $d_i[n]$, $i=0,...,N-1$, transmis par l'émetteur, c'est-à-dire $\mathbf{d}_n=(d_0[n],...d_{N-1}[n])^T$.

Les échantillons en sortie de la FFT peuvent s'exprimer sous la forme d'un vecteur de taille $KN$, noté $\mathbf{Y}_n$ $=(Y_0[n],...,Y_{KN-1}[n])^T$, tel que :

$$\mathbf{Y_n} = \left( \sum_{k=-K+1}^{K-1} \mathbf{d_{n+k}G} \right) \mathbf{H_n} + \mathbf{Z_n} \qquad (3)$$

où G est la matrice de taille $N \times KN$ définie par:

$$\mathbf{G} = \begin{pmatrix} G_{-K+1} & \cdots & G_0 & \cdots & G_{K-1} & \cdots & 0 & \cdots & 0 \\ 0 & \cdots & G_{-K+1} & \cdots & G_0 & \cdots & G_{K-1} & \cdots & 0 \\ \vdots & \ddots & \ddots & \ddots & \ddots & \ddots & \ddots & \ddots & \vdots \\ 0 & \cdots & \cdots & 0 & G_{-K+1} & \cdots & G_0 & \cdots & G_{K-1} \end{pmatrix}$$

où les coefficients $G_k$, $k=0,...,K-1$ sont les valeurs de la fonction de transfert du filtre prototype aux fréquences $k / KT$, avec $G_{-k} = G_k$. La somme $\left( \sum_{k=-K+1}^{K-1} \mathbf{d_{n+k}G} \right)$ reflète la combinaison (dans le domaine temporel) du symbole FBMC $\mathbf{d}_n$ avec les $K$-1 symboles FBMC précédents et les $K$-1 symboles FBMC suivants, telle que réalisée par le module 240. $\mathbf{H_n}$ est une matrice diagonale de taille $KN \times KN$ donnant les coefficients du canal de transmission aux $KN$ fréquences de la FFT et $\mathbf{Z_n}$ est le vecteur de bruit, de taille $KN$.

Etant donné que le filtrage d'analyse et le désétalement spectral dans le module 270 (en sortie de la FFT) permettent de séparer les différents sous-canaux, nous pouvons nous contenter de considérer la contribution due au vecteur de données $\mathbf{d}_n$ :

$$\mathbf{Y_n} = \mathbf{d_n G H_n} + \mathbf{Z_n} \qquad (4)$$

Si l'on note $\mathbf{y}_n =(y_0[n],...,y_{KN-1}[n])^T$ le vecteur de taille $KN$ des échantillons à l'entrée du module de FFT, on a la relation :

$$\mathbf{Y_n} = \mathbf{F y_n} \qquad (5)$$

où F est la matrice de Fourier de taille $KN \times KN$ dont les éléments sont donnés par $F[p,m]=\exp(-j2\pi pm/(NK))$, $p=0,...,KN-1$, $m=,0,...,KN-1$.

Un offset de $\delta F$ entre la fréquence porteuse de l'émetteur et la fréquence de démodulation du récepteur se traduit dans le domaine temporel par la multiplication de chacun des échantillons par un terme de phase. Plus précisément, un échantillon $y_p[n]$ à l'entrée de la FFT, devient en présence d'un offset $\delta F$ :

$$\tilde{y}_p[n] = y_p[n] \exp(j2\pi n \delta F.T) \exp\left( j2\pi p \delta F \frac{T}{N} \right) \exp(j\varphi) \qquad (6)$$

En effet, le premier terme multiplicatif représente la rotation de phase affectant le n[ème] symbole FBMC, le second terme multiplicatif représente la rotation de phase affectant le p[ème] échantillon de ce symbole et le troisième terme multiplicatif est une phase à l'origine.

On peut exprimer l'offset de fréquence porteuse sous la forme d'un multiple entier de l'espacement entre sous-porteuses $\Delta F_c/K=1/(KT)$ et d'un reste inférieur à $\Delta F_c / K$, dénommé ci-après résidu, soit :

$$\frac{\delta F}{\Delta F_c} = q/K + r \qquad (7)$$

où $q \in \mathbb{Z}$ et r est un réel tel que $r \in [-1/(2K), 1/(2K)[$.

l'échantillon $\tilde{y}_p[n]$ reçu en présence d'offset peut alors se réécrire plus simplement :

$$\tilde{y}_p[n] = y_p[n]\exp(j\varphi_n)c_p \qquad (8)$$

où le premier terme multiplicatif est une rotation de phase $\varphi_n = 2\pi n \delta F.T$ qui affecte de manière identique tous les échantillons du symbole FBMC alors que le second terme $c_p = \exp\left(2\pi j \frac{p}{NK}(q+rK)\right)$, $p = 0,...,KN\text{-}1$, affecte différemment les échantillons de ce symbole. Le terme $\exp(j\varphi)$ n'a pas été repris car il est compensé par l'égalisation du canal (simple décalage de phase entre l'émetteur et le récepteur).

Lorsque la FFT est effectuée sur les échantillons $\tilde{y}_p[n]$, $p = 0,...,KN\text{-}1$, le terme $\exp(j\varphi_n)$ est commun à l'ensemble du symbole de sorte que le vecteur $\tilde{\mathbf{Y}}_n$ des échantillons en sortie du module de FFT peut s'exprimer par :

$$\tilde{\mathbf{Y}}_n = e^{j\varphi_n}\mathbf{Y}_n\mathbf{C} \qquad (9)$$

où $\mathbf{C}$ est la matrice de taille $KN \times KN$ définie par:

$$\mathbf{C} = \mathbf{F}\,\mathrm{Diag}(c_0,...,c_{KN-1})\mathbf{F}^H \qquad (10)$$

On comprend en effet que la matrice $\mathbf{C}$ réalise l'équivalent dans le domaine fréquentiel de l'opération de multiplication des échantillons $y_p[n]$ dans le domaine temporel. Cette multiplication dans le domaine temporel se traduit par une convolution dans le domaine fréquentiel ce qui confère à la matrice $\mathbf{C}$ une structure de Toeplitz :

$$\mathbf{C} = \begin{pmatrix} C_0 & C_{-1} & \cdots & C_{-NK+1} \\ C_1 & C_0 & \ddots & \vdots \\ \vdots & \ddots & \ddots & C_{-1} \\ C_{NK-1} & \cdots & C_1 & C_0 \end{pmatrix} \qquad (11)$$

où les coefficients $C_\ell$, $\ell = -NK+1,..,0, NK\text{-}1$ peuvent être obtenus à partir de (10), soit:

$$C_\ell = \exp\left(2\pi j(KN-1)(K\delta F - \ell)/(KN)\right)\frac{sinc(K\delta F - \ell)}{sinc((K\delta F - \ell)/(KN))} \qquad (12)$$

et où $sinc(.)$ désigne le sinus cardinal.

Hormis le terme multiplicatif $e^{j\varphi_n}$, l'effet du décalage d'offset dans le domaine fréquentiel est donné par la matrice $\mathbf{C}$.

On comprendra que les termes non-diagonaux de la matrice $\mathbf{C}$ induisent une interférence entre sous-porteuses (ICI) voire une interférence intersymbole (ISI) si l'offset de fréquence n'est pas négligeable au regard de l'espacement

entre sous-canaux ($\delta F > \dfrac{\Delta F_c}{2}$). En outre, les termes diagonaux sont inférieurs à 1 en valeur absolue (|C$_0$| < 1) ce qui conduit à une atténuation du signal utile.

On a pu vérifier par simulation que les termes diagonaux de la matrice **C** n'étaient plus les termes prépondérants dès lors que $\delta F > \dfrac{\Delta F_c}{2K}$. Ceci se comprendra intuitivement dans la mesure où l'offset de fréquence conduit alors à un glissement fréquentiel sur la sous-porteuse adjacente (au sein de l'intervalle d'étalement) espacée de $\dfrac{\Delta F_c}{K}$ par rapport au centre du sous-canal.

De manière générale, la matrice **C** comporte une sous-diagonale (qui peut être la diagonale elle-même pour de faibles valeurs d'offset) dont les coefficients sont prépondérants et des valeurs de coefficients qui décroissent rapidement de part et d'autre de celle-ci. Autrement dit, l'interférence générée par une sous-porteuse n'affecte qu'un faible nombre de sous-porteuses.

L'effet de l'offset peut se décomposer en une translation de fréquence, c'est-à-dire un décalage des échantillons en sortie de la FFT et par une perturbation des sous-porteuses adjacentes.

La présente invention tire parti de cette décomposition pour effectuer la compensation d'offset.

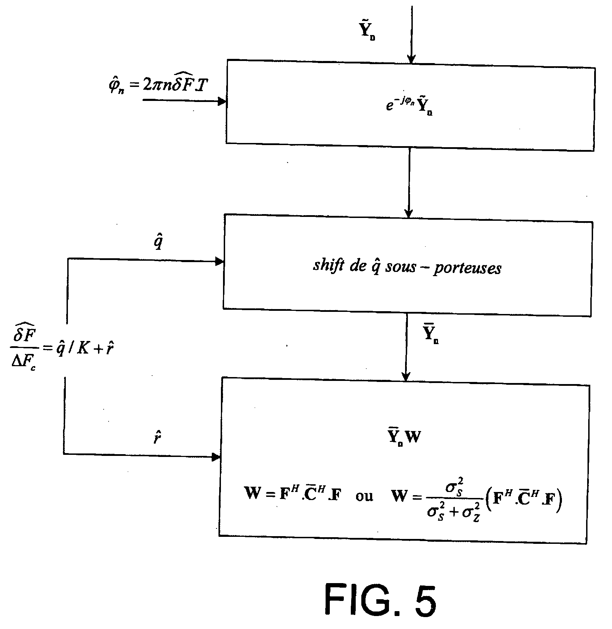

La Fig. 5 représente schématiquement le procédé de compensation d'offset de fréquence porteuse selon un mode de réalisation de l'invention.

On suppose que le récepteur FBMC a préalablement estimé l'offset de fréquence porteuse $\delta F$. Cette estimation, $\widehat{\delta F}$ peut être par exemple obtenue à l'aide d'une séquence pilote, de manière connue en soi. En outre, connaissant l'espacement entre sous-canaux $\Delta F_c$ et le facteur de chevauchement $K$, on en déduit une estimation de $q$ et $r$ vérifiant (7). Autrement dit on calcule $\hat{q}$ et $\hat{r}$ tels que l'offset estimé, normalisé par l'espacement inter-porteuse

$$\delta = \frac{\widehat{\delta F}}{\Delta F_c / K} = \hat{q} + K\hat{r} \text{ avec } |\hat{r}| < \frac{1}{2K}.$$

$\hat{q}$ est la partie entière de l'offset estimé et normalisé et le résidu $\hat{r}$ en est la partie fractionnelle, divisée par $K$.

A l'étape 510, on dispose au niveau du récepteur FBMC des échantillons en sortie du module de FFT de taille $KN$. On applique à chacun des échantillons une correction au moyen d'une multiplication par un même terme de phase, soit

$$e^{-j\hat{\varphi}_n} \tilde{y}_p[n], \quad p = 0,...,KN-1 \qquad (13)$$

où $\hat{\varphi}_n = 2\pi n \widehat{\delta F} T$.

A l'étape 520, on effectue un décalage des échantillons d'un nombre $\hat{q}$ de sous-porteuses. Autrement dit, le premier échantillon est récupéré à la $\hat{q}$ ème sous-porteuse. En pratique, on utilise des plages de garde aux extrémités de la bande de base, de sorte qu'il est possible de faire abstraction des effets de bord jusqu'à un offset maximal, correspondant à une valeur $\hat{q}_{max}$.

Les échantillons obtenus après multiplication en 510 et décalage en 520 sont notés $\bar{y}_p[n]$ et le vecteur de ces échantillons est noté $\bar{\mathbf{Y}}_n = (\bar{y}_0[n],..., \bar{y}_{KN-1}[n])^T$.

A l'étape 530, on effectue une réduction l'interférence entre sous-porteuses en calculant le produit $\bar{\mathbf{Y}}_n \mathbf{W}$ où :

$$\mathbf{W} = \mathbf{F}^H \bar{\mathbf{C}}^H \mathbf{F} \qquad (14)$$

avec $\bar{\mathbf{C}} = \mathbf{Diag}(\bar{c}_0,...,\bar{c}_{KN-1})$ et $\bar{c}_p = \exp\left(2\pi j \dfrac{p\hat{r}}{N}\right)$, $p = 0,...,NK-1$.

Autrement dit la matrice $\bar{\mathbf{C}}$ correspond à la matrice **C**, recentrée sur la diagonale principale. Ce recentrage est permis par la compensation réalisée à l'étape 520. La matrice **W** est, comme la matrice **C**, une matrice de Toeplitz avec $2Q+1$ éléments non nuls par colonne avec $Q < K$. En d'autres termes, la matrice **W** présente une bande de largeur

$2Q+1$ d'éléments non nuls centrée sur la diagonale principale avec $Q < K$.

Etant donné que $\mathbf{FF}^H = \mathbf{I}$ et $\overline{\mathbf{CC}}^H = \mathbf{I}$, on comprend que les étapes 520 et 530 sont équivalentes à une multiplication du vecteur $e^{-j\varphi}{}_n \hat{\mathbf{Y}}_n$ par la matrice $\mathbf{C}^{-1}$. Cette réduction d'interférence est par conséquent du type ZF (*Zero Forcing*). Alternativement, pour éviter un accroissement du bruit, on peut effectuer une réduction d'interférence de type MMSE (*Minimum Mean Square Error)* correspondant à la minimisation de l'erreur quadratique $\|\mathbf{Y}_n - \overline{\mathbf{Y}}_n \mathbf{W}\|^2$. La matrice $\mathbf{W}$ correspondant au critère MMSE est donnée par:

$$\mathbf{W} = \frac{\sigma_s^2}{\sigma_s^2 + \sigma_z^2}\left(\mathbf{F}^H \overline{\mathbf{C}}^H \mathbf{F}\right) = \frac{S/N}{S/N + 1}\left(\mathbf{F}^H \overline{\mathbf{C}}^H \mathbf{F}\right) \qquad (15)$$

où $\sigma_s^2$ est la puissance du signal et $\sigma_z^2$ la puissance de bruit et où $S/N$ est le rapport signal sur bruit.

En sortie de l'étape 530, quel que soit le critère de réduction d'interférence (ZF ou MMSE) retenu, les échantillons donnés par le vecteur peuvent être soumis à une égalisation dans le domaine fréquentiel pour compenser les effets du canal (représentés par la matrice $\mathbf{H}_n$ dans l'équation (4)). Cette égalisation est réalisée à partir d'une estimation de canal fournissant les coefficients de la matrice $\mathbf{H}_n$, de manière connue en soi.

Après égalisation des sous-porteuses, les échantillons sont soumis à une opération de filtrage par le filtre prototype dans le domaine fréquentiel et de désétalement comme décrit en relation avec le module 270 de la Fig. 2.

L'homme du métier comprendra que la compensation d'offset proposée permet de compenser des offsets de fréquence porteuse importants au regard de l'espacement fréquentiel entre sous-canaux adjacents.

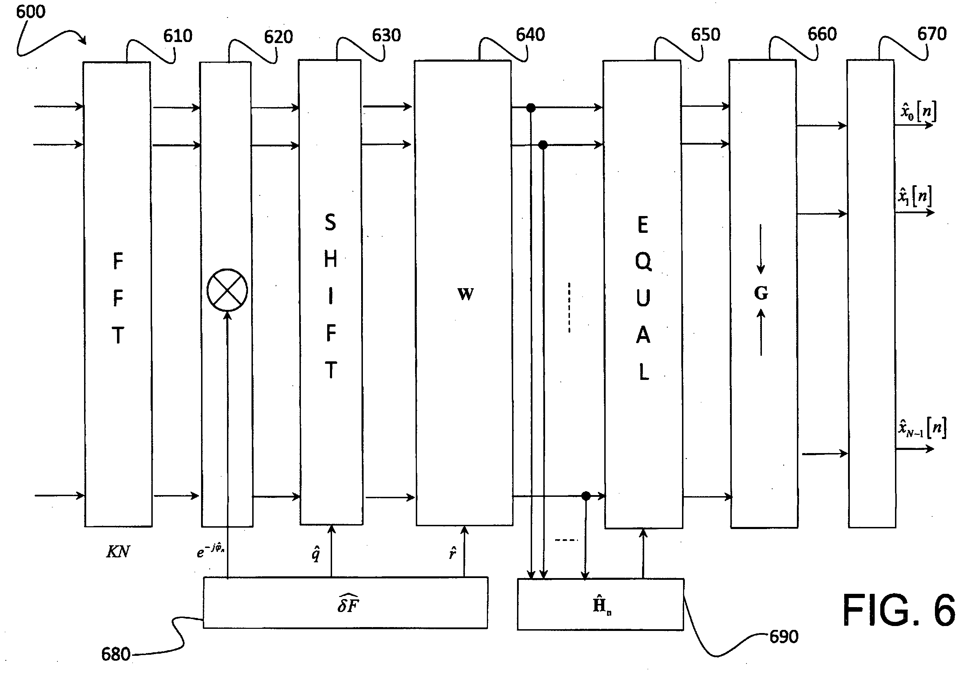

La Fig. 6 représente un récepteur FBMC, 600, à compensation d'offset de fréquence porteuse selon un premier mode de réalisation de l'invention.

Comme dans le récepteur FBMC de la Fig. 2, après démodulation en bande de base, le signal reçu est échantillonné à la cadence fréquence $Nf$ et les échantillons obtenus sont soumis à une FFT glissante, de taille $KN$ dans le module de FFT 610. On rappelle que $N$ est le nombre de sous-canaux et $K$ est le facteur de chevauchement.

Le vecteur de $KN$ échantillons, $\tilde{\mathbf{y}}_n$, est transformé par le module de FFT 610 en un vecteur $\tilde{\mathbf{Y}}_n = \mathbf{F}\tilde{\mathbf{y}}_n$.

Le vecteur d'échantillons est ensuite multiplié par le facteur de phase $e^{-j\varphi n}$ dans le multiplicateur 620 et décalé de $\hat{q}$ sous-porteuses dans le module de décalage 630. Le vecteur $\overline{\mathbf{Y}}_n$ obtenu en sortie du module 630 est soumis ensuite à une opération de réduction d'interférence entre les sous-porteuses générée par l'offset de fréquence porteuse. Cette opération est réalisée en 640 par un filtrage dans le domaine fréquentiel au moyen de la multiplication par la matrice $\mathbf{W}$, celle-ci pouvant avoir la forme (14) ou (15) selon le critère ZF ou MMSE retenu.

Il convient de noter que la multiplication par le facteur de phase $e^{-j\varphi n}$ en 620 peut alternativement intervenir en sortie du module de décalage 630 voire du filtre de réduction d'interférence 640.

Le vecteur en sortie du filtre de réduction d'interférence, 640, $\overline{\mathbf{Y}}_n \mathbf{W}$ peut être soumis à une égalisation de canal, dans le domaine fréquentiel, au moyen d'un égaliseur 650. Là encore, l'égalisation peut être réalisée selon un critère ZF ou MMSE.

Le vecteur des échantillons ainsi égalisés est enfin fourni à un module de filtrage par une batterie de filtres d'analyse et de désétalement spectral, 660, identique au module 270 de la Fig. 2.

En sortie du module de filtrage/ désétalement 660 on obtient un vecteur de taille $N$ qui est traité dans le module de post-traitement 670 (démodulation OQAM) pour récupérer les données transmise par l'émetteur.

Il convient de noter que la multiplication par le facteur de phase $e^{-j\varphi n}$ en 620 peut alternativement intervenir en sortie du module de décalage 630 ou du module de réduction d'interférence 640.

Le récepteur 600 comprend en outre un estimateur de fréquence d'offset de fréquence porteuse, 680, calculant une estimation $\widehat{\delta F}$ de l'offset. L'estimateur 680 peut par exemple estimer l'offset en analysant le déphasage entre deux symboles pilotes d'un même symbole FBMC, situés sur deux sous-porteuses successives.

En outre, il fournit le facteur de phase $e^{-j\varphi}{}_n$ au multiplicateur 620 pour chaque vecteur $\tilde{\mathbf{Y}}_\mathbf{n}$, la valeur $\hat{q}$ au module de décalage 630 et la valeur $\hat{r}$ au module de filtrage 640.

Enfin, un estimateur de canal, 690, estime les coefficients de canal sur les différentes sous-porteuses et en déduit les coefficients d'égalisation. Ces coefficients d'égalisation sont transmis au module d'égalisation 650. L'estimation des coefficients de canal sur les différentes sous porteuses peut être réalisée de manière conventionnelle à l'aide de symboles pilotes.

L'avantage d'un tel récepteur FBMC est de pouvoir réaliser une compensation d'offset de fréquence porteuse lorsqu'il reçoit simultanément des signaux FBMC de plusieurs émetteurs, notamment dans le contexte d'une utilisation sur la voie montante d'un système cellulaire.

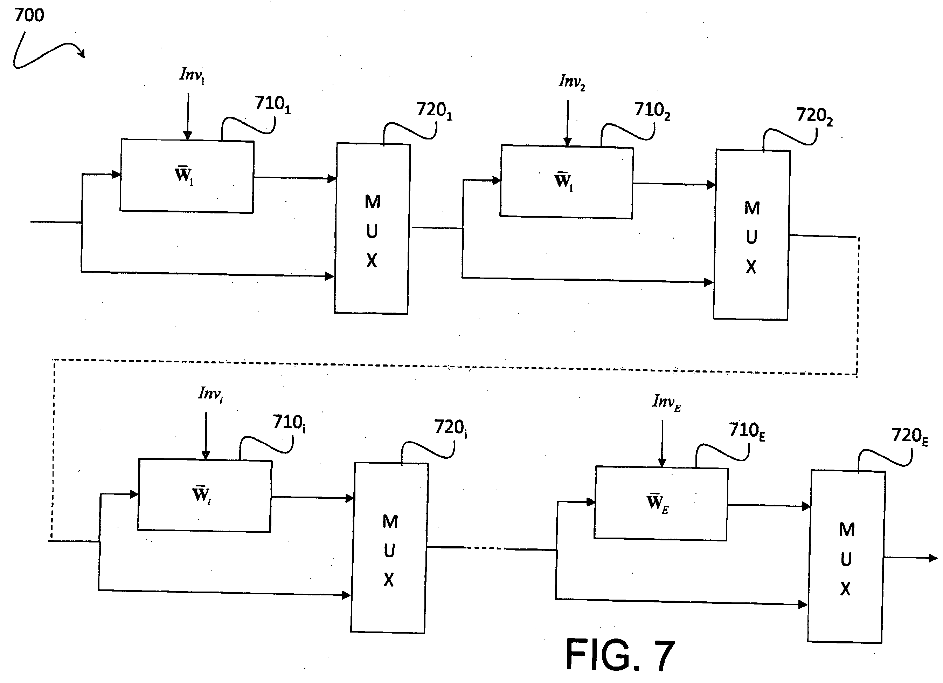

La Fig. 7 représente un mode de réalisation avantageux du filtre de réduction d'interférence de la Fig. 6.

On rappelle que le filtrage opéré par le filtre 640 effectue, dans le cas d'un filtrage ZF, une multiplication matricielle au moyen de la matrice $\mathbf{W} = \mathbf{F}^H \mathbf{Diag}(\bar{c}_0,...,\bar{c}_{KN-1})^H \mathbf{F}$ avec $\bar{\mathbf{C}} = \mathbf{Diag}(\bar{c}_0,...\bar{c}_{KN-1})$ et $\bar{c}_p = \exp\left(2\pi j \dfrac{p\hat{r}}{N}\right)$, $p=0,...,NK$-1.

Le résidu r est un nombre réel compris entre $-\dfrac{1}{2K}$ et $\dfrac{1}{2K}$. Il peut être approximé par une décomposition dyadique avec une erreur maximale $1/2^{E+1}$ :

$$\hat{r} \simeq \sum_{i=1}^{E} \frac{r_i}{2^i} \qquad (16)$$

où $r_i$, $i=1,...,E$, sont des valeurs entières égales à 0, 1 ou -1. En pratique, le facteur de chevauchement est choisi comme étant une puissance de 2 , $K = 2^\kappa$, et par conséquent $r_i = 0$, $i=1,...,\kappa$.

Au lieu de calculer la matrice $\mathbf{W}$ pour chaque nouvel offset et donc chaque nouvelle valeur de résidu $\hat{r}$, il est avantageux de précalculer une pluralité de matrices correspondant à la base de décomposition dyadique. En effet, on notera que si $\hat{r} = \sum_{i=1}^{E} \dfrac{r_i}{2^i}$ :

$$\mathbf{W} = \prod_{i=1}^{E} \mathbf{W}^i \text{ avec } \mathbf{W}^i = \mathbf{F}^H \mathbf{Diag}(w_0^j,...,w_{KN-1}^j)^H \mathbf{F} \qquad (17)$$

où $w_p^i = \exp\left(\pi j \dfrac{pr^i}{2^{i-1}N}\right)$, $p=0,...,NK$-1, $i=1,...,E$. ou $w_p^i = \exp\left(\pi j \dfrac{pr^i}{2^{i-1}N}\right)$, $p=0,...,NK$-1, $i=1,...,E$.

Le filtre de réduction d'interférence, 700, est composé d'une série de filtres élémentaires en cascade $710_1,...,710_Q$.

Le filtre élémentaire $710_i$ effectue une multiplication matricielle de son vecteur d'entrée par la matrice $\overline{\mathbf{W}}^i$ définie, dans le cas ZF, par :

$$\overline{\mathbf{W}}^i = \mathbf{F}^H \mathbf{Diag}(\overline{w}_0^j,...,\overline{w}_{KN-1}^j)^H \mathbf{F} \qquad (18)$$

avec $\overline{w}_p^i = \exp\left(\pi j \dfrac{p}{2^{i-1}N}\right)$, $p=0,..., NK$-1. Les matrices $\overline{\mathbf{W}}^i$, $i=1,..., E$ sont calculées une fois pour toutes. Comme on l'a vu plus haut, étant donné que ces matrices sont des matrices de Toeplitz, les filtres ne nécessitent chacun que $2Q+1$ coefficients. Le nombre total de coefficients à stocker est par conséquent $E(2Q+1)$.

De manière similaire, l'homme du métier comprendra qu'un filtre de réduction d'interférence de type MMSE pourra être décomposé sous la forme de filtres élémentaires définis par l'expression (18), le facteur scalaire de (15) étant appliqué indépendamment de ces filtres.

Les filtres élémentaires sont séparés par des multiplexeurs $720_i$ qui permettent de sélectionner l'entrée ou la sortie des filtres élémentaires $730_i$. Ainsi, chaque multiplexeur $720_i$ permet de court-circuiter ou non le filtrage par le filtre élémentaire $730_i$ selon que $r^i$ est nul ou non.

En outre, chaque filtre élémentaire est pourvu d'un contrôle d'inversion $Inv_i$. Si le résidu d'offset est négatif, et donc $r^i = -1$, le contrôle d'inversion $Inv_i$ est activé. Les coefficients du filtre élémentaire sont alors simplement conjugués et permutés (au moyen d'une symétrie par rapport à la diagonale de la matrice $\overline{\mathbf{W}}^i$). Bien entendu, les coefficients conjugués et permutés peuvent être stockés à l'avance, de sorte que le contrôle d'inversion sélectionne simplement le premier ou le second ensemble de coefficients.

Les commandes des multiplexeurs ainsi que les contrôles d'inversion peuvent être directement pilotés par le module d'estimation d'offset 680.

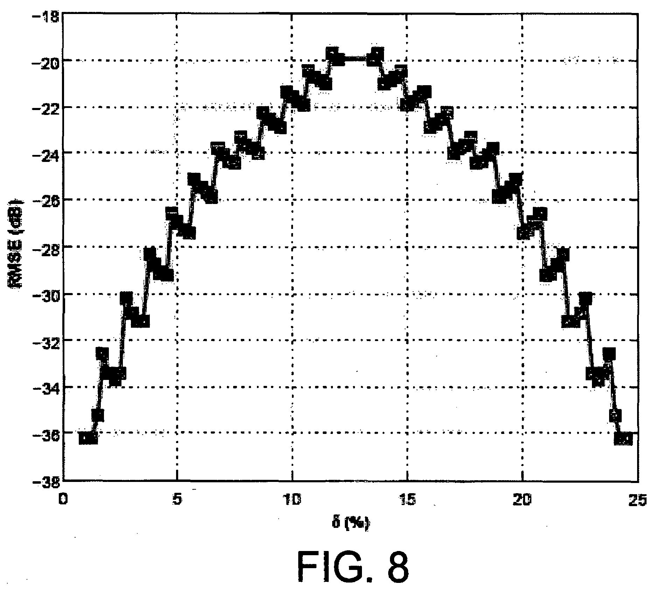

La Fig. 8 représente la performance de la compensation d'offset par le récepteur FBMC de la Fig. 6, lorsque le filtre de réduction d'interférence de la Fig. 7 est utilisé.

La performance de la compensation a été représentée sous la forme d'un écart-type de l'erreur ou RMSE (*Root Mean Square Error*) par rapport à une compensation parfaite (offset nul), en fonction de l'offset normalisé $\delta = \dfrac{\widehat{\delta F}}{\Delta F_c / K}$.

Le système FBMC considéré utilise $N = 64$ sous-canaux et un taux de chevauchement de $K=4$. La simulation a été réalisée pour un nombre $E = 4$ filtres élémentaires et pour une correction de phase parfaite. On remarque que lorsque $\delta$ dépasse 12,5% (c'est-à-dire $\dfrac{1}{2K}$), un décalage de $q =1$ sous-porteuse doit être effectué. Les oscillations de la courbe sont dues au pas de quantification de la décomposition dyadique ($\dfrac{1}{2^E}$).

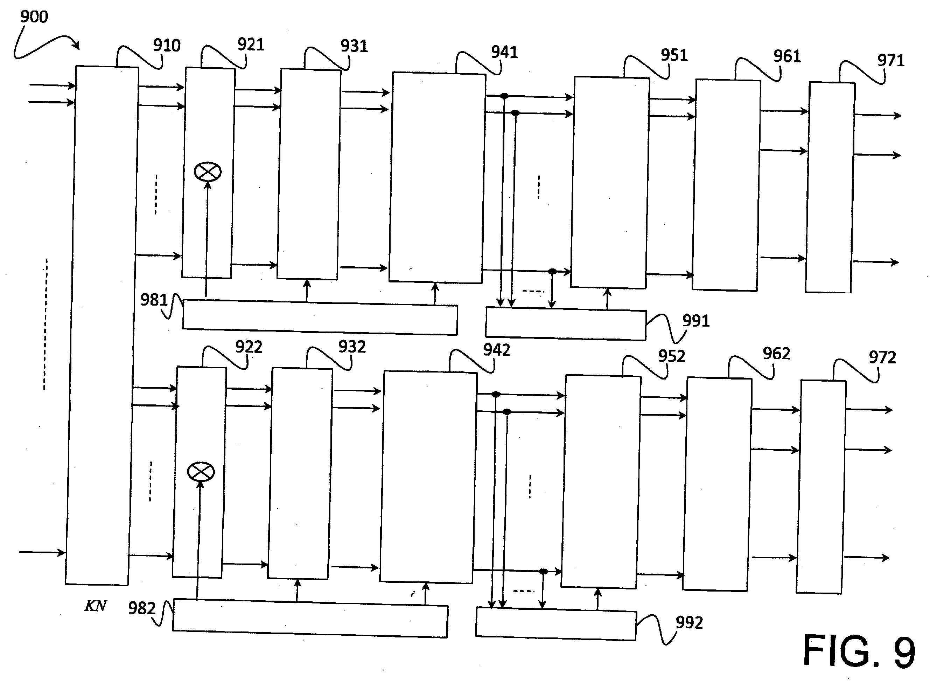

La Fig. 9 représente l'utilisation d'un récepteur FBMC à compensation d'offset de fréquence porteuse pour une pluralité d'émetteurs sur la voie montante.

Les différents utilisateurs (émetteurs FBMC) se partagent l'accès sur la voie montante en utilisant des intervalles de sous-porteuses distincts (*chunks*) comme dans un système OFDMA classique.

Les signaux des différents utilisateurs sont translatés à des fréquences porteuses qui peuvent être affectées de dérives indépendantes. Après démodulation de ces signaux en bande de base dans le récepteur FBMC, ces signaux sont donc affectés par des offsets de fréquence $\delta F_j, j=1,...,J$ où $J$ est le nombre d'utilisateurs se partageant l'accès à la voie montante. On suppose que les différents émetteurs FBMC utilisent le même facteur de chevauchement.

Par souci de simplification, seuls deux utilisateurs ($J = 2$) ont été représentés en Fig. 9.

Le récepteur 900 comprend un module de FFT de taille $KN$, la sortie du module de FFT étant transmise à autant de voies de réception que d'utilisateurs. Les éléments 921, 931,...,991 sont relatifs à la voie de réception du premier utilisateur et respectivement identiques aux éléments 620,630,... 690 de la Fig. 6. De manière similaire, les éléments 922,932,...,992 sont relatifs à la voie de réception du second utilisateur et respectivement identiques aux éléments 620,630,... 690 de la Fig. 6.

Les offsets de fréquence $\widehat{\delta F_1}$ et $\widehat{\delta F_2}$ sont respectivement estimés par les estimateurs 681 et 682. Ces estimateurs fournissent respectivement les facteurs de phase $e^{-j\hat{\varphi}_n^1}$ et $e^{-j\hat{\varphi}_n^2}$ aux multiplicateurs 921 et 922. De même, les valeurs de décalage $\hat{q}_1$ et $\hat{q}_2$ aux modules de décalage 931 et 932. En sortie des modules de décalage, les sous-porteuses relatives aux autres utilisateurs peuvent être abandonnées. Les vecteurs $\overline{\mathbf{Y}}_n^1$ et $\overline{\mathbf{Y}}_n^2$ sont alors respectivement réduits en des vecteurs $\overline{\mathbf{Y}}_n^{1,red}$ et $\overline{\mathbf{Y}}_n^{2,red}$ correspondant aux intervalles de sous-porteuses alloués aux premier et second utilisateurs. Cela permet corrélativement de réduire les matrices $\mathbf{W}_1$ et $\mathbf{W}_2$ aux sous-porteuses d'intérêt (sous-matrices des matrices $\mathbf{W}$ complètes obtenues à partir de $\hat{r}_1$ et $\hat{r}_2$). Ces matrices réduites ont été notées $\mathbf{W}_1^{red}$ et $\mathbf{W}_2^{red}$. De même les filtres d'égalisation et les filtres d'analyse peuvent être simplifiés en réduisant les matrices correspondantes. On voit par conséquent que la compensation d'offset de fréquence proposée permet de traiter les différents utilisateurs de manière indépendante.

## Revendications

1. Récepteur de signal FBMC synthétisé au moyen d'un banc de N filtres de synthèse présentant un facteur de chevauchement $K$, ledit récepteur comprenant :

   - un module de FFT (610) de taille $KN$ pour effectuer une FFT sur un bloc de $KN$ échantillons dudit signal, après démodulation en bande de base, et fournir un bloc de $KN$ échantillons dans le domaine fréquentiel, correspondant à $KN$ sous-porteuses :
   - un module de filtrage par banc de N filtres d'analyse et de désétalement spectral dans le domaine fréquentiel (660), ledit récepteur étant **caractérisé en ce qu'**il comprend en outre :
   - un estimateur (680) d'offset de fréquence porteuse entre la fréquence porteuse du signal et la fréquence de démodulation en bande de base du récepteur;

- un module de décalage (630) en aval du module de FFT décalant les échantillons en sortie de la FFT d'un nombre prédéterminé d'échantillons en fonction de l'offset de fréquence porteuse estimé par ledit estimateur ;
- un filtre de réduction d'interférence (640) pour réduire l'interférence entre sous-porteuses au moyen d'une multiplication par une matrice (**W**) présentant une bande de coefficients non nuls, de largeur $2Q+1$, autour de la diagonale principale, avec $Q < K$, et des zéros partout ailleurs, ledit filtre de réduction d'interférence opérant sur des blocs d'échantillons en sortie du module de décalage (630) et les fournissant au module de filtrage et désétalement spectral (660).

2. Récepteur de signal FBMC selon la revendication 1, **caractérisé en ce que** ledit nombre prédéterminé d'échantillons est obtenu comme la partie entière d'un offset normalisé défini comme le rapport de $\widehat{\delta F}$ par $\Delta F_c / K$ où $\widehat{\delta F}$ est l'offset de fréquence porteuse estimé par l'estimateur d'offset de fréquence porteuse et $\Delta F_c / K$ est l'espacement de fréquence entre sous-porteuses.

3. Récepteur de signal FBMC selon la revendication 2, **caractérisé en ce que** la matrice du filtre d'interférence est définie par :

$$\mathbf{W} = \mathbf{F}^H \overline{\mathbf{C}}^H \mathbf{F}$$

où F est la matrice de Fourier de taille $KN \times KN$, $\overline{\mathbf{C}} = \mathbf{Diag}(\overline{c}_0,...,\overline{c}_{KN-1})$ avec $\overline{c}_p = \exp\left(2\pi j \frac{p\hat{r}}{N}\right)$, $p = 0,...,NK-1$ où $\hat{r}$ est la partie fractionnelle de l'offset normalisé divisé par **K**.

4. Récepteur de signal FBMC selon la revendication 2, **caractérisé en ce que** la matrice du filtre d'interférence est définie par :

$$\mathbf{W} = \frac{S/N}{S/N+1}\left(\mathbf{F}^H.\overline{\mathbf{C}}^H.\mathbf{F}\right)$$

où S/N est le rapport signal sur bruit au niveau de récepteur, **F** est la matrice de Fourier de taille $KN \times KN$, $\overline{\mathbf{C}} = \mathbf{Diag}(\overline{c}_0,...,\overline{c}_{KN-1})$ avec $\overline{c}_p = \exp\left(2\pi j \frac{p\hat{r}}{N}\right)$, $p = 0,...,NK-1$ où $\hat{r}$ est la partie fractionnelle de l'offset normalisé divisé par **K**.

5. Récepteur de signal FBMC selon la revendication 1 ou 2, **caractérisé en ce que** le filtre d'interférence (640) est constitué d'une pluralité (E) de filtres élémentaires ($710_i$) en cascade, séparés par des multiplexeurs ($720_i$), chaque multiplexeur ($720_i$) étant adapté à sélectionner l'entrée ou la sortie d'un filtre élémentaire, chaque filtre élémentaire ($710_i$) effectuant une multiplication matricielle avec une matrice $\overline{\mathbf{W}}^i$ définie par

$$\overline{\mathbf{W}}^i = \mathbf{F}^H.\mathbf{Diag}(\overline{w}_0^i,...,\overline{w}_{KN-1}^i)^H.\mathbf{F} \text{ où } \overline{w}_p^i = \exp\left(\pi j \frac{p}{2^{i-1}N}\right), p = 0,...,NK-1.$$

6. Récepteur de signal FBMC selon la revendication 5, **caractérisé en ce que** chaque filtre élémentaire est pourvu d'un contrôle d'inversion, ledit contrôle d'inversion effectuant une conjugaison des coefficients de la matrice $\overline{\mathbf{W}}^i$ ainsi qu'une symétrie par rapport à la diagonale principale.

7. Récepteur de signal FBMC selon la revendication 6, **caractérisé en ce que** l'estimateur d'offset détermine la partie fractionnelle $\hat{r}$ de la division de l'offset de fréquence porteuse, $\widehat{\delta F}$ par l'espacement de fréquence entre sous-porteuses, $\Delta F_c / K$, divisée par $K$, et en réalise une approximation à l'aide d'une décomposition dyadique $\hat{r} = \sum_{i=1}^{E} \frac{r_i}{2^i}$, $r_i \in \{-1,0,+1\}$, le multiplexeur de rang $i$ court-circuitant le filtre élémentaire de rang $i$ si $r_i = 0$ et activant son contrôle d'inversion si $r_i$ =-1.

8. Récepteur de signal FBMC selon l'une des revendications précédentes, **caractérisé en ce qu'**il comporte un égaliseur de canal dans le domaine fréquentiel (650) opérant sur les blocs d'échantillons en sortie du filtre de réduction d'interférence, l'égaliseur de canal étant situé en aval du filtre d'interférence (640) et en amont du module de filtrage et de désétalement spectral (660).

9. Récepteur de signal FBMC selon l'une des revendications précédentes, **caractérisé en ce que** chaque bloc d'échantillons en sortie de la FFT ou bien du module de décalage ou bien encore du filtre de réduction d'interférence est multiplié à l'aide d'un multiplicateur (620) par un facteur de phase $e^{-j\hat{\varphi}n}$ où $n$ est l'indice du bloc, $\hat{\varphi}_n = 2\pi n \widehat{\delta F}.T$ , où $\widehat{\delta F}$ est l'offset de fréquence porteuse estimé par l'estimateur d'offset de fréquence porteuse et $T$ est l'intervalle entre symboles FBMC.

10. Récepteur de signal FBMC selon la revendication 9, **caractérisé en ce qu'**il comprend module de post-traitement (670) effectuant une démodulation OQAM sur les blocs s'échantillons en sortie du module de filtrage et de désétalement spectral.

11. Méthode de compensation d'offset de fréquence porteuse dans un récepteur de signal FBMC, ledit signal FBMC étant synthétisé au moyen d'un banc de $N$ filtres de synthèse présentant un facteur de chevauchement $K$, ledit récepteur effectuant :

   - une FFT de taille $KN$ sur un bloc de $KN$ échantillons dudit signal, après démodulation en bande de base, pour fournir un bloc de $KN$ échantillons dans le domaine fréquentiel, correspondant à $KN$ sous-porteuses,
   - un filtrage par un banc de $N$ filtres d'analyse suivi d'un désétalement spectral dans le domaine fréquentiel, ladite méthode de compensation d'offset étant **caractérisée en ce qu'**elle comprend :
   - un estimation de l'offset de fréquence porteuse entre la fréquence porteuse du signal et la fréquence de démodulation en bande de base du récepteur;
   - un décalage des échantillons en sortie de la FFT pour récupérer un bloc d'échantillons décalé d'un nombre prédéterminé d'échantillons, ledit nombre étant obtenu à partir de l'offset de fréquence porteuse précédemment estimée ;
   - un filtrage d'interférence entre sous-porteuses réalisé par multiplication du bloc ainsi décalé avec une matrice présentant une bande de coefficients non nuls, de largeur $2Q+1$, autour de la diagonale principale, avec $Q < K$, et des zéros partout ailleurs.

12. Méthode de compensation d'offset de fréquence porteuse selon la revendication 11, **caractérisée en ce que** ledit nombre prédéterminé d'échantillons est obtenu comme la partie entière d'un offset normalisé, défini comme le rapport de $\widehat{\delta F}$ par $\Delta F_c / K$ où $\widehat{\delta F}$ est l'offset de fréquence porteuse estimé par l'estimateur d'offset de fréquence porteuse et $\Delta F_c / K$ est l'espacement de fréquence entre sous-porteuses.

13. Méthode de compensation d'offset de fréquence porteuse selon la revendication 12, **caractérisée en ce que** la matrice du filtre d'interférence est définie par :

$$\mathbf{W} = \mathbf{F}^H \overline{\mathbf{C}}^H \mathbf{F}$$

où **F** est la matrice de Fourier de taille $KN \times KN$, $\overline{\mathbf{C}} = \mathbf{Diag}(\overline{c}_0,...,\overline{c}_{KN-1})$ avec $\overline{c}_p = \exp\left(2\pi j \dfrac{p\hat{r}}{N}\right)$, $p$ =0,..., $NK-1$ où $\hat{r}$ est la partie fractionnelle de la division de l'offset normalisé divisé par $K$.

14. Méthode de compensation d'offset de fréquence porteuse selon la revendication 11 ou 12, **caractérisée en ce que** la matrice du filtre d'interférence est définie par:

$$W = \frac{S/N}{S/N+1}\left(\mathbf{F}^{H}\overline{\mathbf{C}}^{H}\mathbf{F}\right)$$

où S/N est le rapport signal sur bruit au niveau de récepteur, $\mathbf{F}$ est la matrice de Fourrier de taille $KN \times KN$, $\overline{\mathbf{C}} = \mathbf{Diag}(\overline{c}_0,...,\overline{c}_{KN-1})$ avec $\overline{c}_p = \exp\left(2\pi j \frac{p\hat{r}}{N}\right)$, $p = 0,...,NK\text{-}1$ où $\hat{r}$ est la partie fractionnelle de l'offset normalisé divisé par $K$.

15. Méthode de compensation d'offset de fréquence porteuse selon la revendication 11 ou 12, **caractérisée en ce que** l'opération de filtrage comprend une pluralité (E) d'opérations élémentaires de filtrage en cascade, chaque opération de filtrage pouvant être court-circuitée et comprenant une multiplication matricielle avec une matrice $\overline{\mathbf{W}}^i$ définie par

$$\overline{\mathbf{W}}^i = \mathbf{F}^H.\mathbf{Diag}(\overline{w}_0^i,...,\overline{w}_{KN-1}^i)^H.\mathbf{F} \quad \text{où} \quad \overline{w}_p^i = \exp\left(\pi j \frac{p}{2^{i-1}N}\right), \, p = 0,...,NK-1 .$$

**Patentansprüche**

1. Empfänger für ein FBMC-Signal, das mittels einer Bank von N Synthesefiltern synthetisiert ist, die einen Überlappungsfaktor K aufweist, wobei der Empfänger umfasst:

   - ein FFT-Modul (610) der Größe KN zum Durchführen einer FFT auf einem Block von KN Abtastwerten des Signals nach Demodulation ins Basisband und zum Liefern eines Blocks von KN Abtastwerten in der Frequenzdomäne entsprechend KN Unterträgern;
   - ein Modul zum Filtern mittels einer Bank von N Analysefiltern und zum spektralen Entspreizen in der Frequenzdomäne (660), wobei der Empfänger **dadurch gekennzeichnet ist, dass** er ferner umfasst:
   - einen Abschätzer (680) für einen Offset der Trägerfrequenz zwischen der Trägerfrequenz des Signals und der Frequenz der Demodulation ins Basisband des Empfängers;
   - ein Verschiebemodul (630) stromabwärts des FFT-Moduls zum Verschieben der Abtastwerte am Ausgang der FFT um eine vorbestimmte Zahl von Abtastwerten als Funktion des von dem Abschätzer abgeschätzten Offsets der Trägerfrequenz;
   - ein Interferenzreduktionsfilter (640) zum Reduzieren der Interferenz zwischen Unterträgern mit Hilfe einer Multiplikation mittels einer Matrix (**W**), die ein Band von Koeffizienten ungleich Null mit der Größe 2Q+1 um die Hauptdiagonale herum mit Q < K und mit Nullen überall sonst aufweist, wobei das Interferenzreduktionsfilter auf Blöcken von Abtastwerten am Ausgang des Verschiebemoduls (630) arbeitet und sie an das Modul zur Filterung und spektralen Entspreizung (660) liefert.

2. Empfänger für ein FBMC-Signal nach Anspruch 1, **dadurch gekennzeichnet, dass** die vorbestimmte Zahl von Abtastwerten erhalten wird als der ganze Teil eines normierten Offsets, der definiert ist als das Verhältnis von $\widehat{\delta F}$ zu $\Delta F_c / K$, wobei $\widehat{\delta F}$ der Offset der Trägerfrequenz ist, abgeschätzt durch den Abschätzer des Offsets der Trägerfrequenz und $\Delta F_c / K$ der Frequenzabstand zwischen Unterträgern ist.

3. Empfänger für ein FBMC-Signal nach Anspruch 2, **dadurch gekennzeichnet, dass** die Matrix des Interferenzfilters definiert ist durch:

$$W = \mathbf{F}^H \overline{\mathbf{C}}^H \mathbf{F}$$

wobei F die Fouriermatrix der Größe KN x KN ist, $\overline{\mathbf{C}} = \mathbf{Diag}(\overline{c}_0,...,\overline{c}_{KN-1})$ mit $\overline{c}_p = \exp\left(2\pi j \frac{p\hat{r}}{N}\right)$, $p = 0,...,NK\text{-}1$ wobei $\hat{r}$ der Bruchteil des normierten Offsets ist, geteilt durch K.

**4.** Empfänger für ein FBMC-Signal nach Anspruch 2, **dadurch gekennzeichnet, dass** die Matrix des Interferenzfilters definiert ist durch:

$$\mathbf{W} = \frac{S/N}{S/N+1}\left(\mathbf{F}''\,\overline{\mathbf{C}}''\,\mathbf{F}\right)$$

wobei S/N das Signal-/ Rauschverhältnis im Bereich des Empfängers ist, F die Fouriermatrix der Größe KN x KN ist, $\overline{\mathbf{C}} = \mathbf{Diag}(\overline{c}_0,...,\overline{c}_{KN-1})$ mit $\overline{c}_p = \exp\left(2\pi j\,\frac{p\hat{r}}{N}\right)$, $p = 0,..., NK - 1$ wobei $\hat{r}$ der Bruchteil des normierten Offsets ist, geteilt durch K.

**5.** Empfänger für ein FBMC-Signal nach Anspruch 1 oder 2, **dadurch gekennzeichnet, dass** das Interferenzfilter (640) durch eine Mehrzahl (E) von Elementarfiltern (710$_i$) in Reihe gebildet ist, die durch Multiplexer (720$_i$) getrennt sind, wobei jeder Multiplexer (720$_i$) dazu ausgelegt ist, den Eingang oder den Ausgang eines Elementarfilters zu wählen, wobei jedes Elementarfilter (710$_i$) eine Matrixmultiplikation mit einer Matrix $\overline{\mathbf{W}}^i$ durchführt, die definiert ist durch $\overline{\mathbf{W}}^i = \mathbf{F}''.\mathbf{Diag}(\overline{w}_0^i,...,\overline{w}_{KN-1}^i)''.\mathbf{F}$ wobei $\overline{w}_p^i = \exp\left(\pi j\,\frac{p}{2^{i-1}N}\right)$, $p = 0,..., NK - 1$.

**6.** Empfänger für ein FBMC-Signal nach Anspruch 5, **dadurch gekennzeichnet, dass** jedes Elementarfilter mit einer Inversionssteuerung versehen ist, wobei die Inversionssteuerung eine Konjugation der Koeffizienten der Matrix $\overline{\mathbf{W}}^i$ sowie eine Symmetrie bezüglich der Hauptdiagonalen durchführt.

**7.** Empfänger für ein FBMC-Signal nach Anspruch 6, **dadurch gekennzeichnet, dass** der Offsetabschätzer den Bruchteil $\hat{r}$ der Division des Offsets der Trägerfrequenz $\widehat{\delta F}$ durch den Frequenzabstand zwischen Unterträgern $\Delta F_c$ / K, dividiert durch K, bestimmt und hieraus eine Abschätzung mit Hilfe einer dyadischen Zerlegung $\hat{r} = \sum_{i=1}^{\varepsilon}\frac{r_i}{2^i}$, $r_i \in \{-1,0,+1\}$ realisiert, wobei der Multiplexer mit Rang $i$ das Elementarfilter mit Rang $i$ kurzschließt, wenn $r_i = 0$ und seine Inversionssteuerung aktiviert, wenn $r_i = -1$.

**8.** Empfänger für ein FBMC-Signal nach einem der vorhergehenden Ansprüche, **dadurch gekennzeichnet, dass** er einen Kanalentzerrer in der Frequenzdomäne (650) umfasst, der auf den Blöcken von Abtastwerten am Ausgang des Interferenzreduktionsfilters arbeitet, wobei der Kanalentzerrer stromabwärts des Interferenzfilters (640) und stromaufwärts des Moduls zur Filterung und spektralen Entspreizung (660) angeordnet ist.

**9.** Empfänger für ein FBMC-Signal nach einem der vorhergehenden Ansprüche, **dadurch gekennzeichnet, dass** jeder Block von Abtastwerten am Ausgang des FFT oder des Verschiebemoduls oder auch des Interferenzreduktionsfilters mit Hilfe eines Multiplikators (620) mit einem Phasenfaktor $e^{-j\hat{\varphi}_n}$ multipliziert wird, wobei n der Index des Blocks ist, $\hat{\varphi}_n = 2\pi n\widehat{\delta F}.T$, wobei $\widehat{\delta F}$ der Offset der Trägerfrequenz ist, abgeschätzt vom Abschätzer für den Offset der Trägerfrequenz, und T das Intervall zwischen FBMC-Symbolen ist.

**10.** Empfänger für ein FBMC-Signal nach Anspruch 9, **dadurch gekennzeichnet, dass** er ein Nachverarbeitungsmodul (670) umfasst, das eine OQAM-Demodulation auf den Blöcken von Abtastwerten am Ausgang des Moduls zur Filterung und spektralen Entspreizung durchführt.

**11.** Verfahren zur Kompensation eines Trägerfrequenzoffsets in einem Empfänger für ein FBMC-Signal, wobei das FBMC-Signal mittels einer Bank von N Synthesefiltern synthetisiert ist, die einen Überlappungsfaktor K aufweist, wobei der Empfänger folgendes durchführt:

    - eine FFT der Größe KN auf einem Block von KN Abtastwerten des Signals nach Demodulation ins Basisband, um einen Block von KN Abtastwerten in der Frequenzdomäne entsprechend KN Unterträgern zu liefern,
    - eine Filterung mittels einer Bank von N Analysefiltern, gefolgt von einer spektralen Entspreizung in der Frequenzdomäne, wobei das Offsetkompensationsverfahren **dadurch gekennzeichnet ist, dass** es umfasst:

- eine Abschätzung des Trägerfrequenzoffsets zwischen der Trägerfrequenz des Signals und der Frequenz der Demodulation ins Basisband des Empfängers;
- eine Verschiebung der Abtastwerte am Ausgang der FFT zum Erhalten eines Blocks von Abtastwerten, der um eine vorbestimmte Zahl von Abtastwerten verschoben ist, wobei die Zahl erhalten wird ausgehend von dem zuvor abgeschätzten Trägerfrequenzoffset;
- eine Interferenzfilterung zwischen Unterträgern, die realisiert wird durch eine Multiplikation des derart verschobenen Blocks mit einer Matrix, die ein Band von Koeffizienten ungleich Null der Größe 2Q+1 um die Hauptdiagonale herum mit Q < K und Nullen überall sonst aufweist.

12. Verfahren zur Kompensation des Trägerfrequenzoffsets nach Anspruch 11, **dadurch gekennzeichnet, dass** die vorbestimmte Zahl von Abtastwerten erhalten wird als der ganze Teil eines normierten Offsets, der definiert ist als das Verhältnis von $\widehat{\delta F}$ zu $\Delta F_c / K$, wobei $\widehat{\delta F}$ der Offset der Trägerfrequenz ist, abgeschätzt durch den Abschätzer des Offsets der Trägerfrequenz und $\Delta F_c / K$ der Frequenzabstand zwischen Unterträgern ist.

13. Verfahren zur Kompensation des Trägerfrequenzoffsets nach Anspruch 12, **dadurch gekennzeichnet, dass** die Matrix des Interferenzfilters definiert ist durch:

$$\mathbf{W} = \mathbf{F}^H \overline{\mathbf{C}}^H \mathbf{F}$$

wobei F die Fouriermatrix der Größe KN x KN ist, $\overline{\mathbf{C}} = \mathbf{Diag}(\overline{c}_0, ..., \overline{c}_{KN-1})$ mit $\overline{c}_p = \exp\left(2\pi j \frac{p\hat{r}}{N}\right)$, $p = 0, ..., NK-1$

wobei $\hat{r}$ der Bruchteil des normierten Offsets ist, geteilt durch K.

14. Verfahren zur Kompensation des Trägerfrequenzoffsets nach Anspruch 11 oder 12, **dadurch gekennzeichnet, dass** die Matrix des Interferenzfilters definiert ist durch:

$$\mathbf{W} = \frac{S/N}{S/N+1}\left(\mathbf{F}^H \overline{\mathbf{C}}^H \mathbf{F}\right)$$

wobei S/N das Signals- / Rauschverhältnis im Bereich des Empfängers ist, F die Fouriermatrix der Größe KN x KN ist, $\overline{\mathbf{C}} = \mathbf{Diag}(\overline{c}_0, ..., \overline{c}_{KN-1})$ mit $\overline{c}_p = \exp\left(2\pi j \frac{p\hat{r}}{N}\right)$, $p = 0, ..., NK-1$ wobei $\hat{r}$ der Bruchteil des normierten Offsets ist, geteilt durch K.

15. Verfahren zur Kompensation des Trägerfrequenzoffsets nach Anspruch 11 oder 12, **dadurch gekennzeichnet, dass** die Filterungsoperation eine Mehrzahl (E) von elementaren Filterungsoperationen in Reihe umfasst, wobei jede Filterungsoperation kurzgeschlossen werden kann und eine Matrixmultiplikation umfasst mit einer Matrix $\overline{\mathbf{W}}^i$, definiert durch $\overline{\mathbf{W}}^i = \mathbf{F}^H \mathbf{Diag}(\overline{w}_0^i, ..., \overline{w}_{KN-1}^i)^H \mathbf{F}$ wobei $\overline{w}_p^i = \exp\left(\pi j \frac{p}{2^{i-1}N}\right)$, $p = 0, ..., NK-1$.

**Claims**

1. A receiver of an FBMC signal synthesised by means of a bank of *N* synthesis filters having an overlap factor *K*, said receiver comprising:

  - an FFT module (610) of size *KN* in order to effect an FFT on a block of *KN* samples of said signal, after baseband demodulation, and to supply a block of *KN* samples in the frequency domain, corresponding to *KN* subcarriers:
  - a filtering module per bank of *N* analysis and spectral de-spreading filters in the frequency domain (660), said receiver also comprising:

- an estimator (680) for estimating the carrier frequency offset between the carrier frequency of the signal and the baseband demodulation frequency of the receiver;
- a shift module (630) downstream of the FFT module shifting the samples at the output of the FFT by a predetermined number of samples according to the carrier frequency offset estimated by said estimator;
- an interference reduction filter (640) in order to reduce the interference between subcarriers by means of a multiplication by a matrix (**W**) having a band of non-zero coefficients of width $2Q+1$, around the main diagonal, with $Q<K$, and zeroes everywhere else, said interference reduction filter operating on blocks of samples at the output of the shift module (630) and supplying them to the filtering and spectral de-spreading module (660).

2. A signal receiver according to claim 1, **characterised in that** said predetermined number of samples is advantageously obtained as the integer part of a normalised offset defined as the ratio of $\widehat{\delta F}$ by $\Delta F_c / K$ where $\widehat{\delta F}$ is the carrier frequency offset estimated by the estimator and $\Delta F_c / K$ is the frequency spacing between subcarriers.

3. A signal receiver according to claim 2, **characterised in that** the matrix of the interference filter is defined by:

$$\mathbf{W} = \mathbf{F}^H \overline{\mathbf{C}}^H \mathbf{F}$$

where **F** is the Fourier matrix of size $KN \times KN$, $\overline{\mathbf{C}} = \mathbf{Diag}(\overline{c}_0,...,\overline{c}_{KN-1})$ with $\overline{c}_p = \exp\left(2\pi j \dfrac{p\hat{r}}{N}\right)$, $p = 0,..., NK-1$ where $\hat{r}$ is the fractional part of the normalised offset divided by $K$.

4. A signal receiver according to claim 2, **characterised in that** the matrix of the interference filter is defined by:

$$\mathbf{W} = \frac{S/N}{S/N+1}\left(\mathbf{F}^H . \overline{\mathbf{C}}^H . \mathbf{F}\right)$$

where S/N is the signal to noise ratio at the receiver, **F** is the Fourier matrix of size $KN \times KN$, $\overline{\mathbf{C}} = \mathbf{Diag}(\overline{c}_0,..., \overline{c}_{KN-1})$ $\overline{c}_p = \exp\left(2\pi j \dfrac{p\hat{r}}{N}\right)$, $p = 0,..., NK-1$ where $\hat{r}$ is the fractional part of the normalised offset divided by $K$.

5. A signal receiver according to claim 1 or 2, **characterised in that** the interference filter (640) consists of a plurality (E) of elementary filters ($710_i$) in a cascade, separated by multiplexers ($720_i$), each multiplexer being able to select the input or output of an elementary filter, each elementary filter ($720_i$) effecting a matrix multiplication with a matrix $\overline{\mathbf{W}}$ defined by $\overline{\mathbf{W}}^i = \mathbf{F}^H . \mathbf{Diag}(\overline{w}_0^i,...,\overline{w}_{KN-1}^i)^H . \mathbf{F}$ where $\overline{w}_p^i = \exp\left(\pi j \dfrac{p}{2^{i-1}N}\right)$, $p = 0,..., NK-1$.

6. A signal receiver according to claim 5, **characterised in that** each elementary filter is provided with an inversion control, said inversion control effecting a conjugation of the coefficients of the matrix $\overline{\mathbf{W}}^i$ as well as a symmetry with respect to the main diagonal.

7. A signal receiver according to claim 6, **characterised in that** the offset estimator determines the fractional part $\hat{r}$ of the division of the carrier frequency offset, $\widehat{\delta F}$ by the frequency spacing between subcarriers, $\Delta F_c / K$, divided by $K$, and effects an approximation thereof by means of a dyadic decomposition $\hat{r} = \sum_{i=1}^{E} \dfrac{r_i}{2^i}$, $r_i \in \{-1,0,+1\}$ the multiplexer of rank $i$ short-circuiting the elementary filter of rank $i$ if $r_i=0$ and activating its inversion control if $r_i=-1$.

8. A signal received according to one of the preceding claims, **characterised in that** it comprises a channel equaliser in the frequency domain (650) operating on the blocks of samples at the output of the interference reduction filter, the channel equaliser being situated downstream of the interference filter (640) and upstream of the filtering and spectral de-spreading module (660).

9. A signal receiver according to one of the preceding claims, **characterised in that** each block of samples output from the FFT or from the shift module or from the interference reduction filter is advantageously multiplied by means of a multiplier by a phase factor $e^{j\hat{\varphi}n}$ where n is the index of the block, $\hat{\varphi}_n = 2\pi n \widehat{\delta F}.T$, where $\widehat{\delta F}$ is the carrier frequency offset estimated by the carrier frequency offset estimator and T is the interval between FBMC symbols.

10. A signal receiver according to claim 9, **characterised in that** it comprises a post-processing module (670) effecting an OQAM demodulation on the sample blocks output from the filtering and spectral de-spreading module.

11. A carrier frequency offset compensation method for compensating a carrier frequency offset in a receiver of an FBMC signal, said FBMC signal being synthesised by means of a bank of N synthesis filters having an overlap factor $K$, said receiver effecting:

   - an FFT of size $KN$ on a block of $KN$ samples of said signal, after baseband demodulation, in order to supply a block of $KN$ samples in the frequency domain, corresponding to $KN$ subcarriers,
   - a filtering by a bank of N analysis filters followed by a spectral de-spreading in the frequency domain, said offset compensation method being **characterised in that** it comprises:
   - an estimation of the carrier frequency offset between the carrier frequency of the signal and the baseband demodulation frequency of the receiver;
   - an offsetting of the samples at the output of the FFT in order to recover a block of samples offset by a predetermined number of samples, said number being obtained from the previously estimated carrier frequency offset;
   - a filtering of interference between subcarriers effected by multiplication of the block thus offset with a matrix having a band of non-zero coefficients, with a width 2Q+1, around the main diagonal, with $Q<K$, and zeroes everywhere else.

12. A carrier frequency offset compensation method according to claim 11, **characterised in that** said predetermined number of samples is advantageously obtained as the integer part of a normalised offset, defined as the ratio of $\widehat{\delta F}$ to $\Delta F_c / K$ where $\widehat{\delta F}$ is the carrier frequency offset estimated by the carrier frequency offset estimator and $\Delta F_c / K$ is the frequency spacing between subcarriers.

13. A carrier frequency offset compensation method according to claim 12, **characterised in that** the matrix of the interference filter is defined by:

$$\mathbf{W} = \mathbf{F}^H \overline{\mathbf{C}}^H \mathbf{F}$$

where F is the Fourier matrix of size $KNxKN$, $\overline{\mathbf{C}}$ **Diag**$(\overline{c}_0,...,\overline{c}_{KN-1})$ with

$$\overline{c}_p = \exp\left(2\pi j \frac{p\hat{r}}{N}\right), \ p = 0,...,NK-1$$ $p = 0,..., NK$ -1 where $\hat{r}$ is the fractional part of the division of the normalised offset divided by $K$.

14. A carrier frequency offset compensation method according to claim 11 or 12, **characterised in that** the matrix of the interference filter is defined by:

$$\mathbf{W} = \frac{S/N}{S/N+1}\left(\mathbf{F}^H . \overline{\mathbf{C}}^H . \mathbf{F}\right)$$

where S/N is the signal to noise ratio at the receiver, F is the Fourier matrix of size $KNxKN$, $\overline{\mathbf{C}}$=**Diag**$(\overline{c}_0,...,\overline{c}_{KN-1})$

with $\overline{c}_p = \exp\left(2\pi j \dfrac{p\hat{r}}{N}\right)$, $p = 0,...,NK$-1 where $\hat{r}$ is the fractional part of the normalised offset divided by $K$.

15. A carrier frequency offset compensation method according to claim 11 or 12, **characterised in that** the filtering operation comprises a plurality (E) of elementary filtering operations in a cascade, each filtering operation being able to be short-circuited and comprising a matrix multiplication with a matrix $\overline{\mathbf{W}}^i$ defined by

$$\overline{\mathbf{W}}^i = \mathbf{F}^H . \mathbf{Diag}(\overline{w}_0^i,...,\overline{w}_{KN-1}^i)^H . \mathbf{F} \text{ where } \overline{w}_p^i = \exp\left(\pi j \frac{p}{2^{i-1} N}\right), \ p = 0,...,NK-1.$$

**FIG. 1**

**FIG. 2**

$G_3 d_i[n] + G_1 d_{i-1}[n]$

$G_2 d_i[n] + G_2 d_{i-1}[n]$

$G_1 d_i[n] + G_3 d_{i-1}[n]$

$G_0 d_i[n]$

$G_1 d_i[n] + G_3 d_{i+1}[n]$

$G_2 d_i[n] + G_2 d_{i+1}[n]$

$G_3 d_i[n] + G_1 d_{i+1}[n]$

$G_0 d_{i+1}[n]$

$G_3 d_{i+2}[n] + G_1 d_{i+1}[n]$

$G_2 d_{i+2}[n] + G_2 d_{i+1}[n]$

$G_1 d_{i+2}[n] + G_3 d_{i+1}[n]$

$G_0 d_{i+2}[n]$

$G_1 d_{i+2}[n] + G_3 d_{i+3}[n]$

$G_2 d_{i+2}[n] + G_2 d_{i+3}[n]$

$G_3 d_{i+2}[n] + G_1 d_{i+3}[n]$

$d_i[n]$

$d_{i+1}[n]$

$d_{i+2}[n]$

## FIG. 3A

$d_{i,k}^r[n]$

$d_{i+1,k}^r[n]$

$d_{i+2,k}^r[n]$

$d_i^r[n]$

$d_{i+1}^r[n]$

$d_{i+2}^r[n]$

## FIG. 3B

EP 2 846 506 B1

FIG. 4

$\tilde{\mathbf{Y}}_{\mathbf{n}}$

$\hat{\varphi}_n = 2\pi n \widehat{\delta F} T$ → $e^{-j\varphi_n} \tilde{\mathbf{Y}}_{\mathbf{n}}$

$\hat{q}$ → *shift de* $\hat{q}$ *sous − porteuses*

$\dfrac{\widehat{\delta F}}{\Delta F_c} = \hat{q}/K + \hat{r}$

$\bar{\mathbf{Y}}_{\mathbf{n}}$

$\hat{r}$ →

$\bar{\mathbf{Y}}_{\mathbf{n}} \mathbf{W}$

$$\mathbf{W} = \mathbf{F}^H . \bar{\mathbf{C}}^H . \mathbf{F} \quad \text{ou} \quad \mathbf{W} = \frac{\sigma_S^2}{\sigma_S^2 + \sigma_Z^2} \left( \mathbf{F}^H . \bar{\mathbf{C}}^H . \mathbf{F} \right)$$

# FIG. 5

FIG. 6

FIG. 7

EP 2 846 506 B1

FIG. 8

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. HIROSAKI.** An orthogonally multiplexed QAM system using the discrète Fourier transform. *IEEE Trans on Comm.,* Juillet 1981, vol. 29 (7), 982-989
- **P. SIOHAN et al.** Analysis and design of OFDM/OQAM systems based on filterbank theory. *IEEE Trans. on signal processing,* Mai 2002, vol. 50 (5), 1170-1183
- **M. BELLANGER et al.** *FBMC physical layer : a primer, www.ict-phydyas.org*
- **T.H. STITZ et al.** CFO estimation and correction in a Wi-MAX-like FBMC system. *Signal Processing Advances in Wireless Communications, 2009, SPAWC '09,* 633-637